# EUROPÄISCHE PATENTSCHRIFT

(11) **EP 3 104 947 B1**
(45) Veröffentlichungstag und Bekanntmachung des Hinweises auf die Patenterteilung: **06.11.2019**
(21) Anmeldenummer: 14830370.4
(22) Anmeldetag: 26.11.2014
(51) Int. Cl.: A63C 5/12, A43B 7/36

(54) **SPORTSYSTEM MIT ANTISTATIKFUNKTION**
SPORTS SYSTEM HAVING AN ANTI-STATIC FUNCTION
SYSTÈME SPORTIF À FONCTION ANTISTATIQUE

(30) Priorität: 02.01.2014 AT 500022014; 18.07.2014 AT 505032014
(43) Veröffentlichungstag der Anmeldung: 21.12.2016
(73) Patentinhaber: Harml, Markus, 5550 Radstadt (AT); Huber Ski-Con KG, 5550 Radstadt (AT)
(72) Erfinder: HUBER, Rupert, 5550 Radstadt (AT); HARML, Markus, A-5550 Radstadt (AT)
(74) Vertreter: Burger, Hannes
(86) Internationale Anmeldenummer: PCT/AT2014/050280
(87) Internationale Veröffentlichungsnummer: WO 2015/100463

(56) Entgegenhaltungen:
- WO-A1-98/25492
- CN-U- 201 541 805
- DE-A1- 2 147 904
- GB-A- 2 320 669
- JP-A- H09 313 662
- JP-A- 2000 312 601
- US-A1- 2009 032 517
- US-A1- 2011 012 319
- US-A1- 2012 034 830

## Beschreibung

Die Erfindung betrifft ein Sportsystem, wie dieses im Oberbegriff des Anspruches 1 beschrieben ist.

Die WO 98/25492 A1 offenbart ein Sportsystem mit einer Antistatikfunktion, umfassend einen Schuh mit mindestens einem an seiner Außenseite angeordneten oder ausgebildeten ersten Kontaktelement. Dabei ist das erste Kontaktelement mit einem in einem Schuh aufzunehmenden Fuß eines Benutzers elektrisch leitend verbindbar.

Die DE 2 147 904 A beschreibt einen antistatischen Laufschuh, bei welchem von der Fußauflageebene im Schuh durch sämtliche Schichten der Sohle hindurch bis zur unmittelbaren Bodenberührung ein elektrisch leitendes, nicht abfärbendes Widerstandsmaterial eingearbeitet ist. Das in die Sohle eingearbeitete Material kann ein elektrisch leitfähig gemachter Kunststoff oder ein entsprechend leitfähig gemachtes Naturprodukt oder ein elektrisch leitfähiges Zellpolyurethan sein. Vorzugsweise wird ein zelliges, mit einer Ruß-Kunststoff-Dispersion imprägniertes Polyurethanelastomer verwendet, dessen Zellenaufbau so gehalten ist, dass eine Wasseraufnahme nicht möglich ist. Dadurch wird es möglich, einen Benutzer eines derartigen antistatischen Laufschuhs auch auf modernen Sportanlagen, wie zum Beispiel auf Kunststoffrasen oder auf synthetischen Laufbahnen, die aufgrund der Bewegungsrhythmen besonders starke elektrostatische Aufladung durch Reibungselektrizität durch einen "Fuß-BodenKontakt" vom Körper ableiten zu können.

Ein anderer Schuh, insbesondere ein Sicherheitsschuh oder Freizeitschuh, mit einer Antistatikfunktion ist aus der EP 2 005 851 B1 bekannt geworden. Dieser umfasst eine Sohle mit einer Fußauflage und einen Außensohlenbereich, wobei die Fußauflage einstückig mit der Sohle aus einem Kunststoff ausgebildet ist. Weiters ist wenigstens ein durchgängiger, von der Fußauflage bis zum Außensohlenbereich erstreckender Kanal vorgesehen, welcher Kanal mit einem elektrisch leitfähigen Material gefüllt ist. Dabei ist das elektrisch leitfähige Material im Kanal umspritzt oder umgossen.

Die DE 297 00 693 U1 beschreibt eine elektrostatische Entladungsvorrichtung für den menschlichen Körper. Dabei umfasst die Entladungsvorrichtung eine äußere Elektrode, die in der Lauffläche des Schuhs ausgebildet ist. Weiters ist eine innere Elektrode vorgesehen, wobei die innere Elektrode galvanisch mit der äußeren Elektrode zur Ableitung verbunden ist. So kann die innere Elektrode an der Standfläche des Schuhs, vorzugsweise im Bereich des Absatzes, angeordnet sein. Die äußere Elektrode ist ebenfalls vorzugsweise im Bereich des Absatzes angeordnet, wobei die galvanische Verbindung auch federelastisch ausgebildet sein kann.

Eine zusätzliche Erdung des menschlichen Körpers durch stromleitende Schuhe, Socken und Strümpfe ist in der DE 102 55 408 A1 beschrieben. So ist hier vorgesehen, dass in die Schuhe ganz oder teilweise stromleitende Sohlen und ganz oder teilweise stromleitende Einlegesohlen eingelegt sind. In diese Sohlen bzw. Einlegesohlen werden nicht isolierte Stromleiter eingelegt. In die Fußsohlen der Socken und Strümpfe werden weiters stromleitende Fäden oder stromleitende Abschnitte von Webstoffen eingeflechtet. Dadurch wird ausgehend von dem im Schuh aufgenommenen Fuß des Benutzers durch den so herstellbaren, elektrischen Kontakt mit der Erde eine Ableitung der elektrostatischen Aufladung ermöglicht.

Bei der heutzutage verwendeten Bekleidung und dem zumeist isolierend ausgebildeten Schuhwerk lässt sich eine hohe elektrostatische Aufladung des Körpers nicht verhindern. Dadurch ist auch bei der Verwendung von Sportsystemen, bei welchen der Benutzer über einen Schuh, insbesondere einen Sportschuh, mit dem Sportgerät verbunden ist, das Ableiten der elektrostatischen Aufladung und somit ein Potentialausgleich mit der Erde nicht möglich. Durch das Erden wird der naturgegebene, elektrische Grundzustand des Körpers wieder hergestellt und erhält ihn auch aufrecht. Dieser geerdete, elektrische Grundzustand fördert wiederum die Gesundheit und Leistungsfähigkeit im Alltag. In früherer Zeit sind die Menschen über die Erde gelaufen, auf ihr gesessen und geschlafen, wobei die Haut ihres Körpers die Erde berührte und so der natürliche elektrostatische Potentialausgleich erfolgt ist. Dadurch, dass heutzutage überwiegend isolierende Schuhe mit Kunststoffsohlen getragen werden oder in erhöhten Betten in isolierenden Materialen geschlafen wird, berührt die Haut des Menschen, insbesondere die nackten Füße mit ihren weit verzweigten Nervenenden, sehr selten den Erdboden. Durch diese Berührung gleicht sich üblicherweise der Körper sofort an das Energieniveau bzw. Energiepotential der Erde an. Durch das Erden werden im Körper die unterschiedlichsten Reaktionen bewirkt bzw. hervorgerufen. So können beispielsweise die Symptome zahlreicher entzündungsbedingter Krankheiten gelindert bzw. vollständig beseitigt werden. Des Weiteren können chronische Schmerzen verringert oder beseitigt werden, das Energieniveau erhöht sowie natürliche Körperrhythmen reguliert werden. Es kann weiters damit aber auch ein beschleunigter Heilungsprozess sowie eine beschleunigte Regeneration nach intensiver, sportlicher Betätigung erreicht werden. Darüber hinaus kann der Blutdruck reguliert bzw. verbessert sowie die Konsistenz des Blutes verdünnt werden.

Der vorliegenden Erfindung liegt die Aufgabe zugrunde, ein Sportsystem bereitzustellen, welches einen Potentialausgleich ausgehend von dem das Sportsystem verwendenden Benutzer hin zur Erde ermöglicht.

Diese Aufgabe der Erfindung wird durch die Merkmale des Anspruches 1 gelöst. Der durch die Merkmale des Anspruches 1 erzielte Vorteil liegt darin, da so nun auch bei Verwendung eines Sportgeräts in Kombination mit einem dafür ausgerüsteten Schuh für den Benutzer stets eine elektrische Kontaktierung über die durchgehend elektrische Kontaktierung von der Hautoberfläche des Fußes hin zum Gelände und somit dem Potential der Erde ermöglicht wird. Durch das Vorsehen zumindest einer Kontaktierungsfläche am Sportgerät kann so ein Benutzer eines derartigen Sportsystems stets seine statische Aufladung über diese elektrische Leitungsverbindung an die Erde abführen. In der heutigen Zeit werden in der Bekleidungsindustrie hauptsächlich Werkstoffe verwendet, bei welchen sich während des Tragens ein Benutzer durch die damit verbundene, statische Aufladung auf ein bezüglich der Erde dazu höheres Ladungspotential auflädt. Um die Gesundheit und Leistungsfähigkeit des Benutzers zu verbessern, kann mit diesem durchgängig elektrisch leitend ausgebildeten Sportsystem stets ein Potentialausgleich erfolgen und somit auch sofort bei der Sportausübung die erwünschte Ableitung erfolgen.

Vorteilhaft ist auch eine weitere Ausführungsform nach Anspruch 2, da dadurch der Benutzer auch bei den unterschiedlichsten brettartig ausgebildeten Sportgeräten während deren Benutzung stets die elektrostatische Aufladung sofort an die Erde abführen kann und dadurch die auf den Körper einwirkenden Beeinflussungen der elektrostatischen Aufladung minimiert bzw. überhaupt ausgeschaltet werden können.

Vorteilhaft ist weiters eine Ausbildung nach Anspruch 3, da dadurch beim brettartig ausgebildeten Sportgerät bereits auf vorhandene Bauteile zurückgegriffen werden kann und diese durch eine entsprechende, leitende Verbindung mit dem ersten Kontaktelement des Schuhs den Potentialausgleich ermöglichen. Dadurch kann auf zusätzliche Bauteile verzichtet werden, welche die Kontaktierungsfläche ausbilden.

Durch die Ausbildung nach Anspruch 4 ist es möglich, einen ebenfalls bereits vorhandenen Bauteil des Sportgeräts zur Ausbildung der Kontaktierungsfläche einzusetzen. Dies wird häufig dann der Fall sein, wenn keine aus einem elektrisch leitenden Werkstoff gebildete Seitenkante vorhanden ist. Dadurch, dass der Laufflächenbelag zumindest in Teilabschnitten bzw. abschnittsweise die Kontaktierungsfläche bzw. Kontaktierungsflächen ausbildet, kann so auch über einen größeren Flächenanteil die Kontaktierung des Sportgeräts mit dem Gelände erfolgen.

Vorteilhaft ist weiters auch eine Ausbildung nach Anspruch 5. Der dabei erzielte Vorteil liegt darin, dass so auch schon Sportgeräte geschaffen werden können, welche im Zuge von deren Verwendung bei der Sportausübung stets selbst bereits eine Erdung und damit Ableitung von elektrostatischen Aufladungen ermöglichen. Dabei kann die durch Reibung, insbesondere Geländereibung und/oder Luftreibung, beim Fahrbetrieb auftretende elektrostatische Aufladung sofort abgeleitet werden, ohne dass diese auf den Benutzer weitergeleitet wird. Durch den stets möglichen Potentialausgleich werden so störende elektrostatische Felder um das Sportgerät herum vermieden. Durch die sofortige Ableitung kann der durch die elektrostatischen Felder erzeugte zusätzliche Luftwiderstand ebenfalls herabgesetzt oder sogar vollständig vermieden werden. So kann weiters die Festigkeit des Laufflächenbelags ebenfalls besser beeinflusst bzw. erhöht werden, da über das oder die zusätzlich im Sportgerät angeordneten Kontaktierungselemente eine sichere Ableitung ausgehend vom Laufflächenbelag hin zu der durch die zumindest eine Seitenkante gebildete Kontaktierungsfläche ermöglicht wird.

Durch die Ausbildung nach Anspruch 6 ist es möglich, direkt und ohne zusätzlicher Bauteile bzw. Schichten hinterhalb des Laufflächenbelags einerseits eine Ableitungsmöglichkeit von elektrostatischer Aufladung zu schaffen und andererseits dies auf direktem Weg durch eine Verbindung mit den Seitenkanten zu ermöglichen.

Nach einer anderen Ausführungsvariante gemäß Anspruch 7 wird so bei brettartig ausgebildeten Sportgeräten die Möglichkeit geschaffen, den Schuh über eine Kupplungsvorrichtung mit dem Sportgerät während der Benutzung zu verbinden bzw. zu kuppeln, wobei dies über eigene zumeist schraubenförmig bzw. schraubenartig ausgebildete Verbindungselemente erfolgt. Dadurch kann eine sichere Befestigung der Kupplungsvorrichtung am Sportgerät erreicht werden. Wenn das Verbindungselement aus einem elektrisch leitenden Werkstoff gebildet ist, kann so das Verbindungselement bei gewissen Anwendungsfällen auch als elektrisch leitendes Übertragungselement eingesetzt werden. Damit kann auch in diesem Fall auf bereits vorhandene und übliche Bauelemente zurückgegriffen werden.

Bei der Ausgestaltung nach Anspruch 8 ist von Vorteil, dass so bei brettartig ausgebildeten Sportgeräten eine einfache elektrisch leitende Verbindung innerhalb des Sportgeräts zwischen dessen Kontaktierungsflächen und dem oder den Befestigungselementen geschaffen werden kann.

Durch die Weiterbildung nach Anspruch 9 wird erreicht, dass so eine einfache elektrisch leitende Verbindung in der gekuppelten Stellung des Schuhs an der Kupplungsvorrichtung und damit eine durchgängige elektrische Leitungsverbindung zwischen dem Schuhinnenraum und der Kontaktierungsfläche geschaffen werden kann. Damit kann mit wenigen Zusatzbauteilen das Auslangen gefunden werden, wodurch eine einfache und kostengünstige Herstellung des Sportsystems erreicht wird.

Durch die Ausbildung nach Anspruch 10 kann so einfach im Befestigungsbereich für die Kupplungsvorrichtung am und/oder innerhalb des brettartigen Sportgeräts eine elektrische Kontaktierungsmöglichkeit geschaffen werden, welche einfach und ohne abstehende Bauteile am Sportgerät realisiert werden kann. Damit kann beispielsweise bereits durch den Verbindungsvorgang der Kupplungsvorrichtung mit den dafür vorgesehenen Verbindungselementen die entsprechende Leitungsverbindung realisiert werden. Zusätzlich dazu kann das Applikationselement aber auch noch zur Verstärkung des Befestigungsbereichs der Kupplungsvorrichtung am Sportgerät dienen.

Vorteilhaft ist auch eine Ausbildung nach Anspruch 11, da dadurch auch an der Kupplungsvorrichtung an einer vorbestimmten Stelle in Übereinstimmung mit dem am Schuh angeordneten, ersten Kontaktelement eine sichere und durchgängige elektrische Leitungsverbindung geschaffen werden kann.

Gemäß einer Ausbildung, wie im Anspruch 12 beschrieben, wird so eine sichere, elektrische Leitungsverbindung im Bereich des Sportgeräts bei darauf angeordneter Kupplungsvorrichtung geschaffen.

Dabei erweist sich eine Ausgestaltung nach Anspruch 13 vorteilhaft, weil dadurch zum größten Teil auf bereits vorhandene Bauteile zurückgegriffen werden kann, welche durch entsprechende Anordnung und Ausbildung der elektrischen Leitungsverbindung untereinander bzw. miteinander in Kontakt gebracht werden können. So kann wiederum auf einfache Art und Weise ohne großen Anfall von zusätzlichen Bauteilen eine durchgängige elektrische Leitungsverbindung geschaffen werden.

Nach einer vorteilhaften Weiterbildung gemäß Anspruch 14 wird so die Möglichkeit geschaffen, unabhängig vom Verbindungsbereich eine direkte, elektrische Kontaktierung zwischen der Kontaktierungsfläche und dem zweiten Kontaktelement der Kupplungsvorrichtung zu bilden. Damit können so auf einfache Art und Weise auch die unterschiedlichsten Bindungssysteme als Kupplungsvorrichtung eingesetzt werden.

Von Vorteil ist aber auch eine Ausbildung nach Anspruch 15, weil dadurch nicht nur bei der gemeinsamen Verwendung mit dem Sportgerät eine Kontaktierung mit der Erde erfolgt, sondern auch in jenem Fall, wenn der Schuh ohne einem damit gekuppelten Sportgerät eingesetzt bzw. verwendet wird. Damit kann die Zeitdauer der elektrisch leitenden Verbindung zwischen dem Benutzer und der Erde noch zusätzlich erhöht werden.

Gemäß Anspruch 16 wird so die Möglichkeit geschaffen, am Schuh bereits vorhandene Kupplungselemente für die elektrisch leitende Verbindung einsetzen zu können. Damit ist lediglich innerhalb des Schuhs, insbesondere dessen Schale, auf die herzustellende Leitungsverbindung Bedacht zu nehmen.

Bei der Ausbildung gemäß Anspruch 17 wird so auch während des Aufstiegs eine flächenmäßig größere Kontaktierungsfläche und damit eine bessere Ableitung der elektrostatischen Aufladung vom Benutzer an die Erde erfolgen kann.

Möglich ist dabei auch eine Ausbildung nach Anspruch 18, da dadurch eine noch sicherere Ableitung der elektrostatischen Aufladung vom Benutzer an die Erde erfolgen kann. Diese Ausgestaltung ermöglicht bei einer Anordnung des Schifells bzw. dem elektrisch leitenden Fellflor insbesondere dann, wenn im brettartig ausgebildeten Sportgerät eine Aufnahmeöffnung bzw. Ausnehmung angeordnet ist, dass so ein einfacher, direkter Kontakt mit dem Applikationselement herstellbar ist. Dadurch ist es möglich, auf die zusätzliche Ausrüstung bzw. Ausgestaltung von am Sportgerät ansonsten vorzusehenden Kontaktierungsflächen zu verzichten, wodurch das Schifell bzw. das Einlageelement die Kontaktierungsfläche ausbildet.

Schließlich ist aber auch eine Ausbildung möglich, bei der das Sportgerät aus der Gruppe von Schneeschuh, Steigeisen und Eislaufkufe ausgewählt ist und zumindest ein Teilabschnitt derselben aus einem elektrisch leitenden Werkstoff gebildet ist und dieser Teilabschnitt die Kontaktierungsfläche ausbildet, da so auch anders als brettartig ausgebildete Sportgeräte in Verbindung mit einem Schuh als Sportsystem zur elektrischen Ableitung eingesetzt werden können. Damit wird auch hier die Möglichkeit geschaffen, während der gesamten Sportausübung mit derartigen Sportgeräten stets eine elektrisch leitende Verbindung zwischen dem Fuß des Benutzers und dem Gelände, nämlich der Erde, zu erzielen.

Zum besseren Verständnis der Erfindung wird diese anhand der nachfolgenden Figuren näher erläutert.

Es zeigen jeweils in stark vereinfachter, schematischer Darstellung:
- Fig. 1: eine erste Ausführungsform eines Sportsystems, bei welchem das Sportgerät als Alpinschi ausgebildet ist, in Draufsicht mit darauf angeordneter Kupplungsvorrichtung, jedoch entferntem Schuh;
- Fig. 2: das Sportsystem nach Fig. 1 mit Sportgerät und Schuh, in Seitenansicht geschnitten gemäß den Linien II-II in Fig. 1;
- Fig. 3: eine zweite Ausführungsform eines Sportsystems, bei welchem das Sportgerät als Tourenschi ausgebildet ist, in Draufsicht ohne Kupplungsvorrichtung und ohne Schuh;
- Fig. 4: das Sportsystem nach Fig. 3 mit Sportgerät und dem Schuh vor dem Kuppeln mit der Kupplungsvorrichtung, in Seitenansicht geschnitten gemäß den Linien IV-IV in Fig. 3;
- Fig. 5: eine dritte Ausführungsform eines Sportsystems, bei welchem das Sportgerät als Sprungschi ausgebildet ist, in Seitenansicht geschnitten;
- Fig. 6: eine vierte Ausführungsform eines Sportsystems, bei welchem das Sportgerät als Snowboard ausgebildet ist, in Draufsicht mit darauf angeordneter Kupplungsvorrichtung, jedoch entferntem Schuh;
- Fig. 7: das Sportsystem nach Fig. 6 mit Sportgerät und Schuh, in Seitenansicht geschnitten gemäß den Linien VII-VII in Fig. 6;
- Fig. 8: eine fünfte Ausführungsform eines Sportsystems, bei welchem das Sportgerät als Langlaufschi oder Back-Country Schi ausgebildet ist, in Seitenansicht geschnitten;
- Fig. 9: eine sechste Ausführungsform eines Teilabschnitts eines Sportsystems, bei welchem das Sportgerät als Langlaufschi oder Back-Country Schi ausgebildet ist und einer darauf befestigten und stilisiert dargestellten Kupplungsvorrichtung, in Ansicht, teilweise geschnitten;
- Fig. 10: eine siebte Ausführungsform eines Sportsystems, bei welchem das Sportgerät als Steigeisen ausgebildet ist, in Seitenansicht geschnitten;
- Fig. 11: eine achte Ausführungsform eines Sportsystems, bei welchem das Sportgerät als Schneeschuh ausgebildet ist, in Seitenansicht geschnitten;
- Fig. 12: eine neunte Ausführungsform eines Sportsystems, bei welchem das Sportgerät als Eislaufkufe ausgebildet ist, in Seitenansicht geschnitten;
- Fig. 13: eine weitere Ausführungsform eines Sportsystems mit einem Sportbekleidungssystem sowie eine Sportgerät mit durchgängiger Antistatikfunktion;
- Fig. 14: eine erste mögliche Ausführungsform eines Sportbekleidungssystems mit Antistatikfunktion;
- Fig. 15: eine zweite mögliche Ausführungsform eines Sportbekleidungssystems mit Antistatikfunktion;
- Fig. 16: eine dritte mögliche Ausführungsform eines Sportbekleidungssystems mit Antistatikfunktion;
- Fig. 17: eine vierte mögliche Ausführungsform eines Sportbekleidungssystems mit Antistatikfunktion;
- Fig. 18: eine fünfte mögliche Ausführungsform eines Sportbekleidungssystems mit Antistatikfunktion;
- Fig. 19: eine Verbindungsmöglichkeit eines Schutzhelms mit der Oberbekleidung eines Sportbekleidungssystems;
- Fig. 20: eine möglich Ausbildung eines Finger-Bekleidungsstücks mit Antistatikfunktion;
- Fig. 21: eine andere Ausbildung eines Finger-Bekleidungsstücks mit Antistatikfunktion;
- Fig. 22: ein erster Schichtaufbau der Oberbekleidung mit Antistatikfunktion, im Schnitt;
- Fig. 23: ein zweiter Schichtaufbau der Oberbekleidung mit Antistatikfunktion, im Schnitt;
- Fig. 24: ein dritter Schichtaufbau der Oberbekleidung mit Antistatikfunktion, im Schnitt;
- Fig. 25: ein vierter Schichtaufbau der Oberbekleidung mit Antistatikfunktion, im Schnitt;
- Fig. 26: ein fünfter Schichtaufbau der Oberbekleidung mit Antistatikfunktion, im Schnitt;
- Fig. 27: eine mögliche Ausbildung eines Sportgeräts mit Antistatikfunktion, im Querschnitt;
- Fig. 28: eine weitere Ausbildung eines Sportgeräts mit Antistatikfunktion;
- Fig. 29: eine andere mögliche Ausbildung eines Sportgeräts mit Antistatikfunktion;
- Fig. 30: eine weitere mögliche Ausbildung eines Sportgeräts mit Antistatikfunktion, im Querschnitt;
- Fig. 31: eine andere Ausbildung eines Sportgeräts mit Antistatikfunktion;
- Fig. 32: eine weitere Ausbildung eines Sportgeräts mit Antistatikfunktion;
- Fig. 33: eine andere mögliche Ausbildung eines antistatisch ausgebildeten Sportgeräts, im Querschnitt;
- Fig. 34: eine weitere mögliche Ausbildung eines antistatisch ausgebildeten Sportgeräts, im Querschnitt.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen. Der Begriff "insbesondere" wird nachfolgend so verstanden, dass es sich dabei um eine mögliche speziellere Ausbildung oder nähere Spezifizierung eines Gegenstands oder eines möglichen Verfahrensschritts handeln kann, aber nicht unbedingt eine zwingende, bevorzugte Ausführungsform desselben oder eine Vorgehensweise darstellen muss. Unter Antistatikfunktion wird dabei verstanden, dass das Sportgerät selbst für sich alleinig oder in Kombination mit dem Schuh sowie weiterer Bekleidungsstücke oder der Schuh in Kombination mit zumindest einem Bekleidungsstück antistatisch ausgebildet ist und somit eine Kontaktierung mit der Erde ermöglicht.

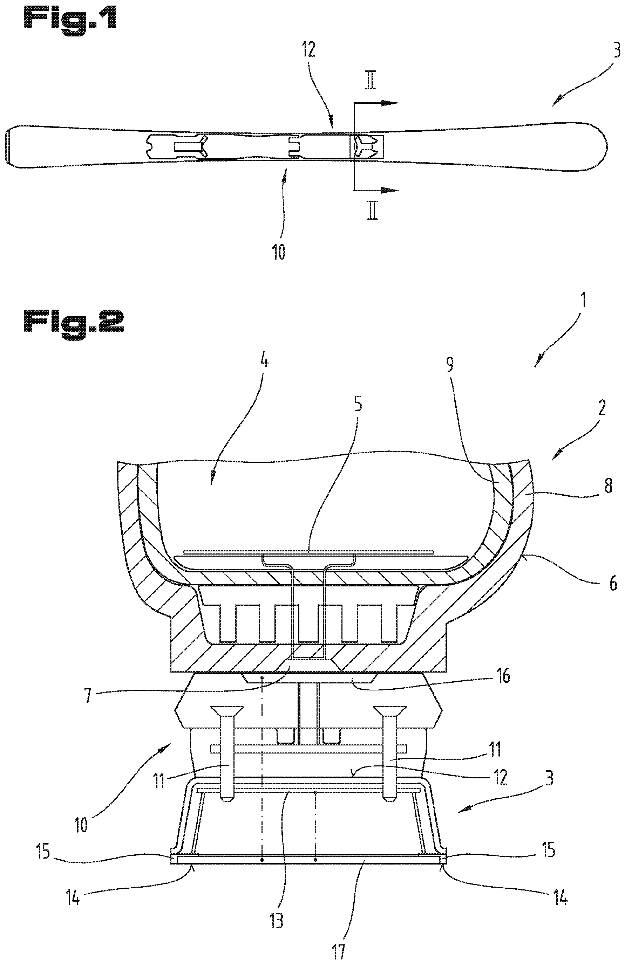

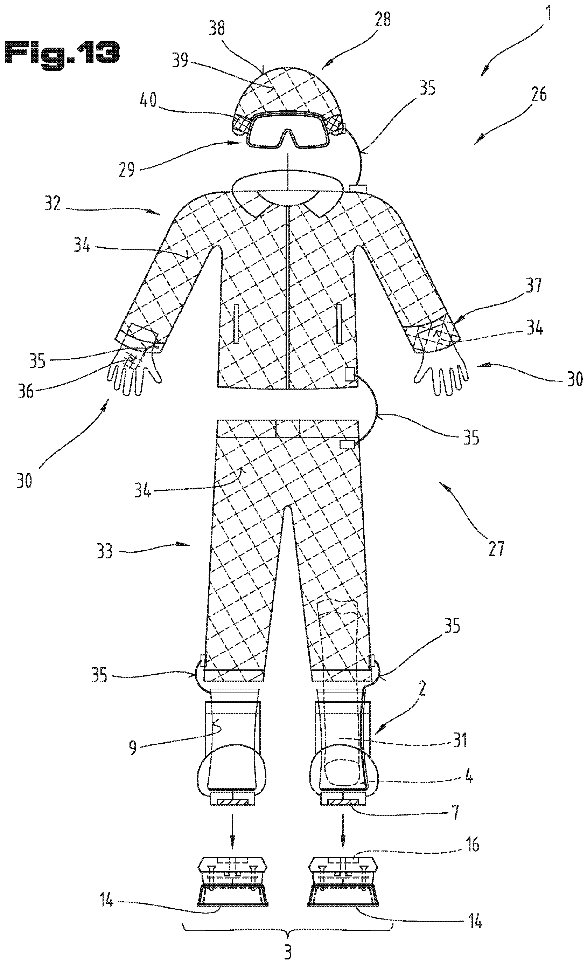

In den Fig. 1 bis 12 sind verschiedene Beispiele für Sportsysteme 1 gezeigt und beschrieben, wobei erwähnt sei, dass es auch noch darüber hinausgehende Anwendungsgebiete gibt, bei denen ein Benutzer Schuhe 2 trägt und der oder die Schuhe 2 mit einem Sportgerät 3 verbunden, insbesondere gekuppelt, oder direkt damit versehen sind. Umfasst das Sportgerät 3 mehrere Komponenten, kann dieses auch als Sportgerätsystem bezeichnet werden. Dies insbesondere dann, wenn Bauteile zur Erzielung einer Antistatikfunktion für den Benutzer vorhanden sind bzw. eingesetzt werden. Die nachfolgend beschriebenen und nur beispielhaft für eine Vielzahl von Möglichkeiten angeführten Ausführungsbeispiele können mit einem in den Fig. 13 bis 26 beschriebenen Sportbekleidungssystem 26 und/oder den unterschiedlichen Sportgeräten 3 gemäß der Fig. 1 bis 12 sowie der Fig. 27 bis 33 kombiniert werden.

Bevorzugt handelt es sich bei den Sportsystemen 1 um Wintersportsysteme, Ballsportsysteme sowie Systeme für andere sportliche Freizeitaktivitäten, wie Wandern, Bergsteigen, Klettern, X-Country, Nordic Walking und viele andere Sportarten, wobei alle Sportsysteme 1 eine Antistatikfunktion aufweisen. Dies bedeutet, dass der Benutzer eines derartigen Systems auch bei Verwendung des Sportgeräts 3 mit der Erde in elektrisch leitendem Kontakt steht und somit das Sportsystem 1 antistatisch ausgebildet ist.

Bei den ersten Ausführungsformen des Sportsystems 1 werden unterschiedliche Kombinationsmöglichkeiten des Schuhs 2 mit einem der Sportgeräte 3 beschrieben, wobei hier stets ein elektrischer Ableitungspfad vom Innenraum des Schuhs 2 über das Sportgerät 3 hin zur Erde besteht.

Der Benutzer des Schuhs 2, insbesondere wenn es ein für den Wintersport vorgesehener Schuh ist, trägt zumeist eine Socke oder einen Strumpf und kommt so nicht in direkten Hautkontakt mit einem im Schuhinnenraum 4 angeordneten elektrischen Ableitungselement 5. Deshalb ist in so einem Fall schon darauf zu achten, dass die Socke oder der Strumpf eine elektrische Leitungsverbindung zwischen der Haut des Benutzers und dem zumindest einen elektrischen Ableitungselement 5 ermöglicht. Dazu können die unterschiedlichsten bekannten elektrisch leitenden Systeme bei der unmittelbar auf der Haut getragenen Fußbekleidung verwendet werden.

Das elektrische Ableitungselement 5 kann z.B. durch elektrische Leiter in der Schuheinlage, eine aus einem elektrisch leitenden Werkstoff gebildete Schuheinlage oder direkt an der Schuhinnenfläche angeordnete elektrische Leiter gebildet sein. Es wäre aber auch noch möglich, wenn der Schuh 2 eine Schuhschale und einen darin aufgenommenen Innenschuh umfasst, dass der Innenschuh zumindest abschnittsweise an seiner dem Schuhinnenraum 4 zugewendeten Innenfläche und/oder der Innenschuh zumindest abschnittsweise eine elektrisch leitende Schicht aufweist.

Wie bei Schuhen, insbesondere auch bei Sportschuhen bereits bekannt ist, steht das im Schuhinnenraum 4 angeordnete oder ausgebildete elektrische Ableitungselement 5 mit mindestens einem an einer Außenseite 6 bzw. einer Außenfläche des Schuhs 2 angeordneten oder ausgebildeten ersten Kontaktelement 7 in elektrisch leitender Verbindung. Unter Außenseite 6 bzw. Außenfläche des Schuhs 2 wird dabei jener Bereich an diesem verstanden, welcher den Schuh 2 auf der vom Schuhinnenraum 4 abgewendeten Seite umgrenzt. Das oder die ersten Kontaktelemente 7 können an der Außenseite 6 bzw. Außenfläche und/oder sich in diese hinein erstreckend angeordnet oder ausgebildet sein. Damit ist das erste Kontaktelement 7 mit einem im Schuh 2 aufzunehmenden Fuß eines Benutzers elektrisch leitend verbindbar. Dies auch dann, wenn der Schuh 2 eine feste äußere Schale 8 und einen in deren Innerem aufgenommenen zusätzlichen Innenschuh 9 umfasst.

Alle nachfolgend noch beschrieben Bauteile bzw. Elemente, welche zur elektrisch leitenden Verbindung zwischen dem Schuhinnenraum 4 und dem Sportgerät 3, insbesondere dessen Kontaktierungsfläche 14, dienen, können in ihrer Gesamtheit auch als elektrische Ableitungsvorrichtung bezeichnet werden.

Das Sportgerät 3 kann unterschiedlichst ausgebildet sein. Ist dieses z.B. brettartig ausgebildet, kann dieses z.B. als Wintersportgerät aus der Gruppe von Alpinschi, Langlaufschi, Back-Country Schi, Sprungschi, Tourenschi, Snowboard ausgewählt sein.

Unabhängig davon kann aber das Sportgerät 3 aus der Gruppe von Schneeschuhen, Steigeisen, Eislaufkufe ausgewählt sein.

So ist in den Fig. 1 und 2 ist eine erste mögliche Ausbildung des Sportsystems 1 gezeigt, welches im vorliegenden Ausführungsbeispiel durch einen Schischuh und einen Alpinschi als Sportgerät 3 gebildet ist.

An dem hier als Alpinschi ausgebildeten Sportgerät 3 ist eine Kupplungsvorrichtung 10 zur Halterung des Schuhs 2 in einer gekuppelten Stellung am brettartig ausgebildeten Sportgerät 3 angeordnet. Die Kupplungsvorrichtung 10 wird im vorliegenden Ausführungsbeispiel auch als Schibindung bezeichnet, welche einen Vorderbacken sowie einen Fersenbacken sowie gegebenenfalls plattenartig ausgebildete Zwischenelemente umfasst. Die Kupplungsvorrichtung 10 kann weiters mittels zumindest eines Verbindungselements 11 mit dem Sportgerät 3 verbunden sein. Die beiden hier in der Fig. 2 dargestellten Verbindungselemente 11 sind schematisch als Schrauben angedeutet und ragen über die Kupplungsvorrichtung 10 soweit in Richtung auf das Sportgerät 3 vor, dass sie in das brettartig ausgebildete Sportgerät 3 in bekannter Weise hineinragen und die Halterung bewirken.

Die Anordnung der Kupplungsvorrichtung 10 am brettartig ausgebildeten Sportgerät 3 erfolgt in zumindest einem Befestigungsbereich 12, welcher zumindest im Bereich des Vorderbackens und/oder des Fersenbackens am Sportgerät 3 vorgesehen ist und sich aber auch durchgehend über die gesamte Länge der Kupplungsvorrichtung 10 erstrecken kann.

Weiters ist hier noch vorgesehen, dass am und/oder innerhalb des brettartigen Sportgeräts 3 zumindest im Befestigungsbereich 12 der Kupplungsvorrichtung 10 am brettartig ausgebildeten Sportgerät 3 ein aus einem elektrisch leitenden Werkstoff gebildetes Applikationselement 13 vorgesehen bzw. angeordnet ist. Im vorliegenden Ausführungsbeispiel ist das Applikationselement 13, beispielsweise im Bereich des Obergurts des Schis angeordnet und kann zusätzlich noch zur Erhöhung der Ausreißfestigkeit der Verbindungselemente 11 bei der Befestigung der Kupplungsvorrichtung 10 dienen. Um das oder die Verbindungselemente 11 als elektrische Leiter ausbilden zu können, sind diese aus einem elektrisch leitenden Werkstoff auszubilden.

Das hier brettartig ausgebildete Sportgerät 3 weist an seiner einem Gelände des Sportgeräts 3 zuwendbaren Unterseite zumindest eine Kontaktierungsfläche 14 auf Bei den brettartig ausgebildeten Sportgeräten 3 kann die Kontaktierungsfläche 14 beispielsweise durch zumindest eine aus einem elektrisch leitenden Werkstoff gebildete Seitenkante 15 gebildet sein. Diese ist zumeist aus einem metallischen Werkstoff gebildet.

Wie weiters besser aus der Fig. 2 zu ersehen ist, ist das im Schuhinnenraum 4 angeordnete Ableitungselement 5 elektrisch leitend mit dem ersten, am Schuh 2 angeordneten Kontaktelement 7 elektrisch leitend verbunden. An der Kupplungsvorrichtung 10 kann im Bereich des ersten Kontaktelements 7 diesem gegenüberliegend bzw. unmittelbar benachbart ein zweites Kontaktelement 16 angeordnet bzw. vorgesehen sein. Das zweite Kontaktelement 16 kann beispielsweise durch einen Teil einer Aufstandsfläche für den Schuh 2 an der Kupplungsvorrichtung 10 ausgebildet sein. Das zumindest zweite Kontaktelement 16 ist bei einer mit dem Schuh 2 gekuppelten Stellung mit dem ersten Kontaktelement 7 des Schuhs 2 kontaktiert und somit elektrisch leitend verbunden.

Um eine elektrisch leitende Verbindung zwischen dem zweiten Kontaktelement 16 der Kupplungsvorrichtung 10 und der Kontaktierungsfläche 14 zu erzielen, ist auch hier eine leitende Verbindung herzustellen. So steht hier das zweite Kontaktelement 16 der Kupplungsvorrichtung 10 elektrisch leitend mit dem Applikationselement 13 in Verbindung. Dies kann beispielsweise dadurch realisiert werden, dass zumindest einzelne Bauteile der Kupplungsvorrichtung 10 selbst aus einem elektrisch leitenden Werkstoff gebildet sind. Das zweite Kontaktelement 16 ist weiters mit diesen elektrisch leitend ausgebildeten Bauteilen elektrisch leitend verbunden. Die elektrisch leitend ausgebildeten Bauteile der Kupplungsvorrichtung 10 erstrecken sich zumindest bis hin zu dem oder den Verbindungselementen 11, welche im vorliegenden Ausführungsbeispiel elektrisch leitend mit dem Applikationselement 13 verbunden sind. Dadurch, dass, wie bereits zuvor beschrieben, das Applikationselement 13 seinerseits elektrisch leitend mit der Kontaktierungsfläche 14 verbunden ist, wird so eine durchgehende elektrische Leitungsverbindung zwischen dem im Schuhinnenraum 4 angeordneten Ableitungselement 5 und der Kontaktierungsfläche 14, welche hier als Seitenkante 15 ausgebildet ist, geschaffen.

Unabhängig davon oder zusätzlich dazu könnte bei brettartig ausgebildeten Sportgeräten 3 die Kontaktierungsfläche 14 auch durch zumindest einen aus einem elektrisch leitenden Werkstoff gebildeten Teilabschnitt eines Laufflächenbelages 17 gebildet sein. Da Laufflächenbeläge 17 zumeist aus einem Kunststoffmaterial hergestellt sind, kann dieser Werkstoff selbst elektrisch leitende Eigenschaften aufweisen und/oder der Werkstoff mit elektrisch leitenden Partikeln versetzt sein. Um eine elektrisch leitende Verbindung zwischen der als Laufflächenbelag 17 ausgebildeten Kontaktierungsfläche 14 und dem Applikationselement 13 zu schaffen, ist in strichlierten Linien eine Leitungsverbindung schematisch vereinfacht dargestellt. Die elektrische Verbindung zwischen den als Seitenkanten 15 ausgebildeten Kontaktierungsflächen 14 und dem Applikationselement 13 ist beidseits der Seitenwangen des Schis als schematische Leitungsverbindung angedeutet. Dabei sei erwähnt, dass die elektrische Leitungsverbindung durch Kabel, spezielle Klebemittel, Einlageteile oder dergleichen gebildet sein können, welche die entsprechenden Bauteil elektrisch leitend miteinander verbinden.

Unabhängig davon wäre es aber auch möglich, auf die Anordnung bzw. das Vorsehen des Applikationselements 13 im Befestigungsbereich 12 zu verzichten und eine oder mehrere der Kontaktierungsflächen 14 des brettartig ausgebildeten Sportgeräts 3 mittels eines vereinfacht in strich-punktierten Linien dargestellten Kabels direkt mit dem zweiten Kontaktelement 16 der Kupplungsvorrichtung 10 elektrisch leitend zu verbinden. Eine zusätzliche Kontaktierung der als Seitenkante 15 ausgebildeten Kontaktierungsfläche 14 wäre auch noch möglich. Weiters wäre es unabhängig davon aber auch noch möglich, die als Seitenkante 15 ausgebildete Kontaktierungsfläche 14 direkt mit dem zweiten Kontaktelement 16 der Kupplungsvorrichtung 10 elektrisch leitend zu verbinden. Dies könnte ebenfalls mit einem Kabel erfolgen.

Im vorliegenden Ausführungsbeispiel ist das erste Kontaktelement 7 am Schuh 2 in dessen Sohlenbereich angeordnet oder ausgebildet. Bevorzugt erfolgt dies im vorderen Sohlenabschnitt, zumeist unterhalb des Ballenbereichs.

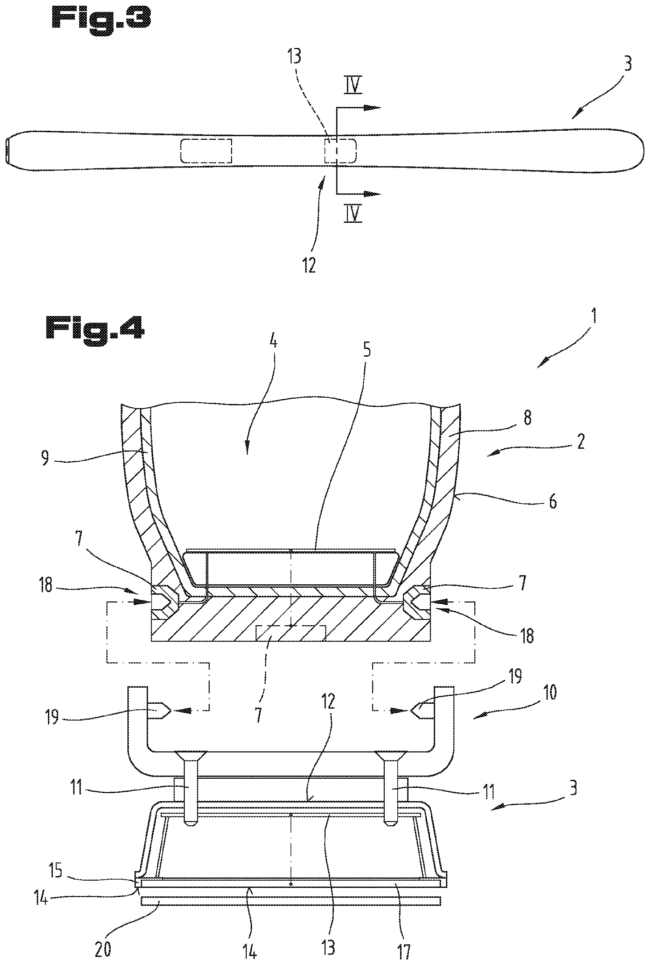

In den Fig. 3 und 4 ist eine weitere und gegebenenfalls für sich eigenständige zweite Ausführungsform des Sportsystems 1 gezeigt, wobei wiederum für gleiche Teile gleiche Bezugszeichen bzw. Bauteilbezeichnungen wie in den vorangegangenen Fig. 1 und 2 verwendet werden. Um unnötige Wiederholungen zu vermeiden, wird auf die detaillierte Beschreibung in den vorangegangenen Fig. 1 und 2 hingewiesen bzw. Bezug genommen.

Bei diesem hier gezeigten und beschriebenen Ausführungsbeispiel ist das Sportgerät 3 als Tourenschi mit einer als Tourenbindung ausgeführten Kupplungsvorrichtung 10 ausgebildet. Der Schuh 2 ist z.B. als sogenannter Tourenschischuh ausgebildet, welcher je nach Bindungssystem selbst Anbauteile bzw. Einlegeteile in seiner Schale 8 aufweisen kann, welche zum direkten Kuppeln mit der Kupplungsvorrichtung 10 dienen können.

Dieses Sportsystem 1 ist grundsätzlich sehr ähnlich jenem aufgebaut, wie dies bereits zuvor detailliert in den Fig. 1 und 2 beschrieben worden ist. So ist die Kupplungsvorrichtung 10 in dem dafür vorgesehenen Befestigungsbereich 12 am Sportgerät 3 mittels der Verbindungselemente 11 daran befestigt. In dem als brettartig ausgebildeten Sportgerät 3 ist hier ebenfalls wiederum das Applikationselement 13 im Bereich des Obergurtes angeordnet bzw. vorgesehen. Die Kontaktierungsfläche bzw. Kontaktierungsflächen 14 kann/können durch die Seitenkante 15 und/oder den Laufflächenbelag 17 gebildet sein. Die elektrisch leitende Verbindung zwischen den Verbindungselementen 11 gegebenenfalls unter Zwischenschaltung des Applikationselements 13 hin zu den Kontaktierungsflächen 14 kann analog erfolgen, wie dies bereits zuvor detailliert erläutert worden ist.

Im Gegensatz zu den zuvor beschriebenen Ausführung und der Anordnung des ersten Kontaktelements 7 am Schuh 2 ist hier vorgesehen, dass das erste Kontaktelement 7 nicht im Sohlenbereich der Schale 8 sondern durch zumindest ein am Schuh 2 angeordnetes oder ausgebildetes Kupplungselement 18 gebildet ist. Diese Kupplungselemente 18 können beispielsweise jeweils durch ein sogenanntes Metall-Insert gebildet sein, welche beim Herstellungsvorgang der Schale 8 in dieser integriert bzw. aufgenommen und somit daran feststehende gehalten werden. Die Kupplungselemente 18 weisen jeweils zylindrische Aufnahmeöffnungen auf, in welche Kupplungszapfen 19 der Kupplungsvorrichtung 10 in der mit dem Schuh 2 gekuppelten Stellung eingreifen.

Beim Schuh 2 wird eine erste elektrisch leitende Verbindung so zwischen dem Ableitungselement 5 und den Kupplungselementen 18 ausgebildet.

Da der oder die Kupplungszapfen 19 sowie zumindest einzelne weitere Bauteile der Kupplungsvorrichtung 10 aus elektrisch leitenden Werkstoffen gebildet sind, kann so wiederum eine leitende Verbindung zwischen dem im Schuhinnenraum 4 angeordneten Ableitungselement 5 hin zur Kontaktierungsfläche 14 geschaffen werden. Bei eingekuppelter Stellung des Schuhs 2 an der Kupplungsvorrichtung 10 wird so über Teile der Kupplungsvorrichtung 10, die Verbindungselemente 11 sowie gegebenenfalls unter Zwischenschaltung des Applikationselements 13 die leitende Verbindung zu den Kontaktierungsflächen 14 geschaffen.

Weiters wäre es aber auch noch möglich, zumindest ein zusätzliches erstes Kontaktelement 7 im Sohlenbereich des Schuhs 2 anzuordnen bzw. vorzusehen, um so auch eine Erdung des Benutzers zu erreichen, wenn dieser das Sportgerät 3 gerade nicht benutzt.

Weiters ist hier noch schematisch vereinfacht dargestellt, dass im Bereich des Laufflächenbelages 17 ein mit dem Sportgerät 3 verbindbares Schifell 20 angeordnet sein kann, welches jedoch noch vom Laufflächenbelag 17 distanziert gezeigt ist und in bekannter Weise davon ablösbar befestigt ist. Das am Laufflächenbelag 17 aufgebrachte Schifell 20 dient bei der Verwendung von Tourenschiern im sogenannten Aufstiegsmodus zur Erhöhung des Rückhalts der Sportgeräte 3 an dem durch den Schnee gebildeten Gelände.

So besteht hier die Möglichkeit, dass das als Tourenschi ausgebildete Sportgerät 3 mit seinen Seitenkanten 15 und/oder Laufflächenbelag 17 zumindest eine der Kontaktierungsflächen 14 ausbildet. Um auch über das den Laufflächenbelag 17 zumindest bereichsweise abdeckenden Schifell 20 eine zusätzliche Kontaktierung mit dem Gelände zu erzielen, kann das Schifell 20 zumindest in Teilabschnitten elektrisch ausgebildet und/oder mit einem elektrisch leitenden Fellflor versehen sein. Damit kann auch während der Aufstiegsbewegung eine großflächige Kontaktfläche zur leitenden Verbindung zwischen der Erde und dem Fuß des Benutzers geschaffen werden. Um eine noch bessere elektrische Leitungsverbindung zu schaffen, kann der elektrisch leitende Teilabschnitt des Schifells 20 und/oder der elektrisch leitende Fellflor mit zumindest einer der Kontaktierungsflächen 14 elektrisch leitend verbunden sein.

Unabhängig davon wäre es aber auch noch möglich, dass der elektrisch leitende Teilabschnitt des Schifells 20 und/oder der elektrisch leitende Fellflor direkt mit dem Applikationselement 13 elektrisch leitend verbunden ist.

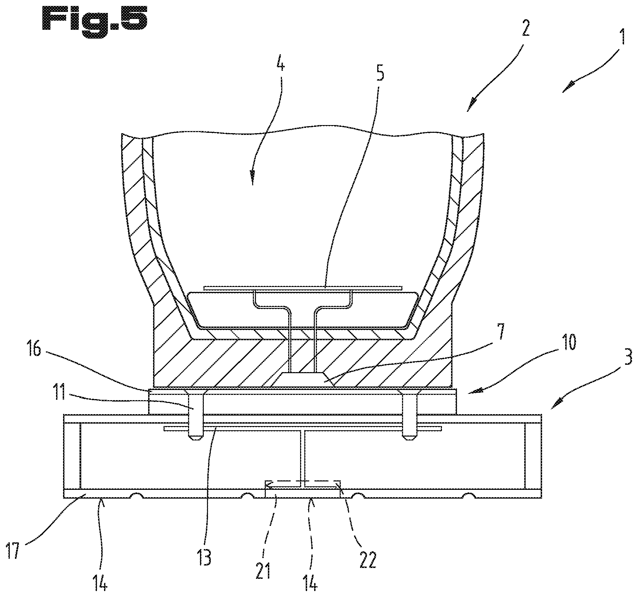

In der Fig. 5 ist eine weitere und gegebenenfalls für sich eigenständige dritte Ausführungsform des Sportsystems 1 gezeigt, wobei wiederum für gleiche Teile gleiche Bezugszeichen bzw. Bauteilbezeichnungen wie in den vorangegangenen Fig. 1 bis 4 verwendet werden. Um unnötige Wiederholungen zu vermeiden, wird auf die detaillierte Beschreibung in den vorangegangenen Fig. 1 bis 4 hingewiesen bzw. Bezug genommen.

Bei diesem hier gezeigten Ausführungsbeispiel ist das Sportgerät 3 des Sportsystems 1 durch einen Sprungschi gebildet. Entsprechend dazu ist auch der Schuh 2 ausgebildet, welcher über eine nicht näher dargestellte Kupplungsvorrichtung 10 wiederum mit dem Sportgerät 3 für dessen Verwendung gekuppelt werden kann.

Im Schuhinnenraum 4 ist wiederum zur Kontaktierung mit dem Benutzer das Ableitungselement 5 angeordnet, welches elektrisch leitend mit dem hier im Sohlenbereich des Schuhs 2 angeordneten ersten Kontaktelement 7 elektrisch leitend verbunden ist. Dies ist vereinfacht durch Striche angedeutet. Im Bereich der Kupplungsvorrichtung 10 und dem ersten Kontaktelement 7 unmittelbar gegenüberliegend ist das zweite Kontaktelement 16 vorgesehen, welches im vorliegenden Ausführungsbeispiel direkt mit den Verbindungselementen 11 in elektrisch leitendem Kontakt steht.

Innerhalb des Sportgerätes 3 kann das Applikationselement 13 angeordnet sein, mit welchem durch die Befestigung der Kupplungsvorrichtung 10 das zweite Kontaktelement 16 über die Verbindungselemente 11 in elektrisch leitendem Kontakt steht.

Bei dem hier als Sprungschi ausgebildetem Sportgerät 3 ist der Laufflächenbelag 17 als Kontaktierungsfläche 14 vorgesehen, wobei diese Kontaktierungsfläche 14 elektrisch leitend mit dem Applikationselement 13 verbunden ist.

Es wäre aber auch möglich, im Bereich des Laufflächenbelags 17 eine Aufnahmeöffnung 21 vorzusehen, welche zur Aufnahme eines Einsatzteils 22 dient. So kann der hier in strichlierten Linien angedeutete Einsatzteil 22 als elektrisch leitendes Element die Kontaktierungsfläche 14 ausbilden und kann seinerseits elektrisch leitend mit dem Applikationselement 13 und/oder den Verbindungselementen 11 elektrisch leitend verbunden sein. Der Einsatzteil 22 bzw. das Einsatzelement kann auch durch das Schifell 20 gebildet oder damit versehen sein. Diese unterschiedlichen Ausführungsmöglichkeiten des Schifells 20, des Einsatzteil 22 sowie deren elektrisch leitenden Eigenschaften können auch bei anderen brettartig ausgebildeten Sportgeräten Anwendung finden bzw. dort eingesetzt werden.

Weiters könnte am Schuh 2 auch ein eigenes, jedoch nicht näher dargestelltes Kupplungselement 18 angeordnet bzw. vorgesehen sein, welches mit einem Teil der Kupplungsvorrichtung 10 in der Kupplungsstellung verbindbar ist. Das Kupplungselement 18 könnte z.B. im Zehen- oder Ballenbereich am Schuh 2 angeordnet sein und selbst aus einem elektrisch leitenden Werkstoff gebildet sein.

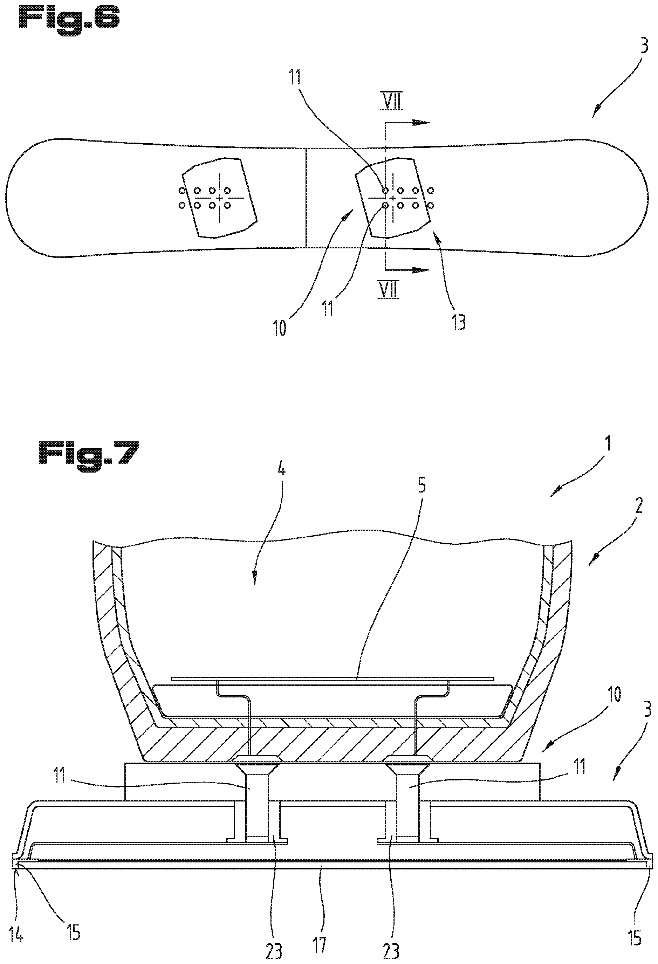

In den Fig. 6 und 7 ist eine weitere und gegebenenfalls für sich eigenständige vierte Ausführungsform des Sportsystems 1 gezeigt, wobei wiederum für gleiche Teile gleiche Bezugszeichen bzw. Bauteilbezeichnungen wie in den vorangegangenen Fig. 1 bis 5 verwendet werden. Um unnötige Wiederholungen zu vermeiden, wird auf die detaillierte Beschreibung in den vorangegangenen Fig. 1 bis 5 hingewiesen bzw. Bezug genommen.

Diese hier mögliche weitere Ausführungsform des Sportsystems 1 umfasst als Sportgerät 3 ein sogenanntes Snowboard, welches sowohl in einteiliger als auch geteilter Form ausgebildet sein kann. Da dieses brettartig ausgebildete Sportgerät 3 zumeist auch Seitenkanten 15 aufweist, können diese wiederum die Kontaktierungsflächen 14 ausbilden. Bei derartigen Sportgeräten 3 ist es üblich, dass im brettartig ausgebildeten Sportgerät 3 in dessen Befestigungsbereich 12 zumindest ein Befestigungselement 23 angeordnet oder ausgebildet ist. Da es sich bei derartigen Befestigungselementen 23 zumeist um hülsenförmig ausgebildete Bauteile mit einem Innengewinde handelt und diese aus einem elektrisch leitenden Werkstoff ausgebildet sein können, ist eine direkte elektrisch leitende Verbindung mit der Kontaktierungsfläche 14, insbesondere der Seitenkante 15 und/oder dem Laufflächenbelag 17 möglich.

Das oder die Verbindungselemente 11 dienen zur Verbindung der Kupplungsvorrichtung 10 mit dem Sportgerät 3 und sind mit dem jeweiligen Befestigungselement 23 verbunden, insbesondere darin eingeschraubt. So kann in diesem vorliegenden Ausführungsbespiel das Verbindungselement 11 direkt bei einer mit dem Schuh 2 gekuppelten Stellung mit dem ersten Kontaktelement 7 des Schuhs 2 kontaktiert sein. Dadurch könnte das zweite Kontaktelement 16 der Kupplungsvorrichtung 10 entfallen.

Zusätzlich oder unabhängig davon wäre es aber auch noch möglich, an der Kupplungsvorrichtung 10 das zuvor beschriebene zweite Kontaktelement 16 vorzusehen, um so eine bessere Kontaktierung mit dem ersten Kontaktelement 7 des Schuhs 2 zu erzielen.

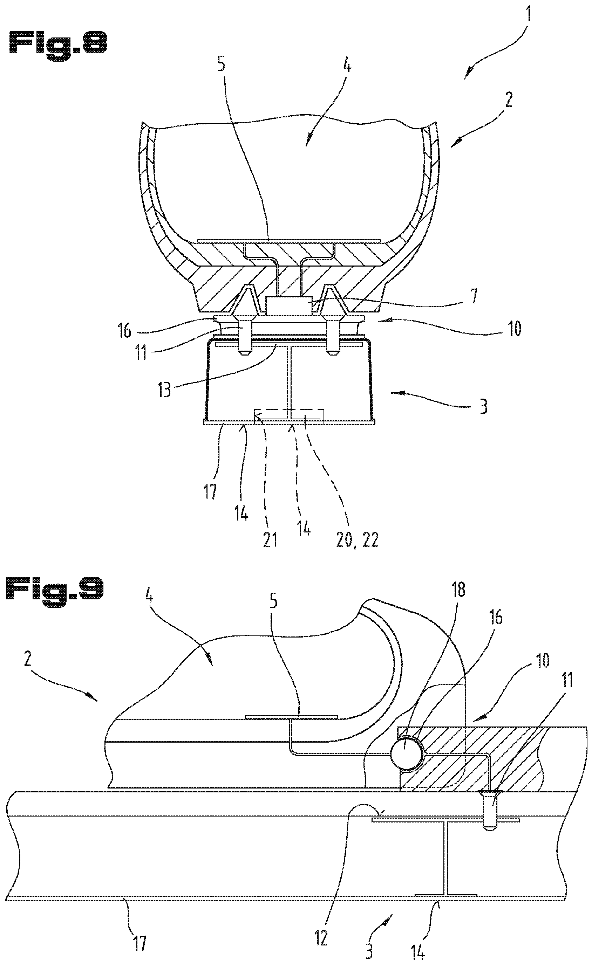

In der Fig. 8 ist eine weitere und gegebenenfalls für sich eigenständige fünfte Ausführungsform des Sportsystems 1 gezeigt, wobei wiederum für gleiche Teile gleiche Bezugszeichen bzw. Bauteilbezeichnungen wie in den vorangegangenen Fig. 1 bis 7 verwendet werden. Um unnötige Wiederholungen zu vermeiden, wird auf die detaillierte Beschreibung in den vorangegangenen Fig. 1 bis 7 hingewiesen bzw. Bezug genommen.

Die weitere mögliche Ausführungsform des Sportsystems 1 umfasst als Sportgerät 3 sogenannte Langlaufschier oder Back-Country Schier und als Schuh 2 einen Langlaufschuh bzw. einen dafür ausgebildeten Sportschuh. Über die Kupplungsvorrichtung 10 ist für die Verwendung des Sportgeräts 3 der Schuh 2 mit diesem über bekannte Bindungssysteme zu verbinden. Im Schuhinnenraum 4 ist wiederum das zumindest eine Ableitungselement 5 angeordnet. Auch hier könnte wiederum im Bereich der Sohle des Schuhs 2 das erste Kontaktelement 7 angeordnet sein, welches bei einer mit dem Sportgerät 3 gekuppelten Stellung des Schuhs 2 mit dem zweiten Kontaktelement 16 im Bereich der Kupplungsvorrichtung 10 elektrisch kontaktiert ist.

Wie bereits zuvor beschrieben, kann im Sportgerät 3 wiederum das Applikationselement 13 angeordnet sein. Das zweite Kontaktelement 16 der Kupplungsvorrichtung 10 steht über das oder die Verbindungselemente 11 mit dem Applikationselement 13 in elektrisch leitender Verbindung. Da bei dem als Langlaufschi ausgebildeten Sportgerät 3 zumeist keine Seitenkante 15 vorhanden ist, ist zumindest ein Teilabschnitt des Laufflächenbelags 17 als Kontaktierungsfläche 14 auszubilden, welche wiederum in elektrisch leitender Verbindung mit dem Applikationselement 13 steht.

Zusätzlich oder unabhängig davon wäre es auch noch möglich, im Bereich des Laufflächenbelages 17 eine Aufnahmeöffnung 21 vorzusehen, wie diese bereits zuvor in der Fig. 5 bei dem als Sprungschi ausgebildeten Sportgerät 3 beschrieben worden ist. Diese Ausführung ist in strichlierten Linien dargestellt. In dieser Aufnahmeöffnung 21 kann beispielsweise wiederum das Schifell 20 und/oder der Einsatzteil 22 aufgenommen sein, welcher dann die Kontaktierungsfläche 14 ausbildet. Eine entsprechend elektrisch leitende Verbindung zwischen dem Schifell 20 und/oder dem Einsatzteil 22 sowie dem Applikationselement 13 hin zu den Verbindungselementen 11 ist wiederum in entsprechender Weise vorzusehen.

In der Fig. 9 ist eine weitere und gegebenenfalls für sich eigenständige sechste Ausführungsform des Sportsystems 1 gezeigt, wobei wiederum für gleiche Teile gleiche Bezugszeichen bzw. Bauteilbezeichnungen wie in den vorangegangenen Fig. 1 bis 8 verwendet werden. Um unnötige Wiederholungen zu vermeiden, wird auf die detaillierte Beschreibung in den vorangegangenen Fig. 1 bis 8 hingewiesen bzw. Bezug genommen.

Auch bei diesem hier gezeigten Ausführungsbeispiel ist als Sportgerät 3 ein Langlaufschi bzw. Back-Country Schi gezeigt, bei welchem der Schuh 2 über die Kupplungsvorrichtung 10 mit dem Sportgerät 3 in der gekuppelten und kontaktierten Stellung mit der im Bereich des Laufflächenbelages 17 angeordneten bzw. ausgebildeten Kontaktierungsfläche 14 gezeigt ist.

Im Schuhinnenraum 4 ist wiederum das Ableitungselement 5 angeordnet, welches in elektrisch leitendem Kontakt mit dem am Schuh 2 angeordneten Kupplungselement 18 steht.

So bildet auch hier wiederum das Kupplungselement 18 das erste Kontaktelement 7 aus, welches als Bolzen bzw. stiftförmiges Element ausgebildet sein kann. Um einerseits eine stabile Befestigung bzw. Kupplung des Schuhs 2 an der Kupplungsvorrichtung 10 und andererseits eine gewisse Schwenkbewegung des Kupplungselements 18 in der gekuppelten Stellung in der Halteaufnahme der Kupplungsvorrichtung 10 zu ermöglichen, ist bei dieser Ausführung das Kupplungselement 18 in senkrechter Richtung bezüglich der Längserstreckung des Sportgeräts 3 sowie bevorzug in paralleler Ausrichtung bezüglich des Laufflächenbelages 17 bzw. der Oberfläche verlaufend angeordnet. Zum Kuppeln des Schuhs 2 mit der Kupplungsvorrichtung 10 ist das Kupplungselement 18 in eine entsprechende, bekannte und hier schematisch dargestellte Halteaufnahme der Kupplungsvorrichtung 10 einzusetzen und dort arretiert zu halten. Dabei kann das zweite Kontaktelement 16 durch einen Teil der Kupplungsvorrichtung 10, insbesondere dessen Halteaufnahme gebildet sein. Da das Kupplungselement 18 bevorzugt aus einem elektrisch leitenden Werkstoff gebildet ist, kann so einfach eine elektrisch leitende Verbindung zwischen dem Fuß des Benutzers ausgehend vom Ableitungselement 5 über die Kontaktelemente 7, 16 hin zur Kontaktierungsfläche 14 hergestellt werden.

Wie bereits zuvor in den Fig. 3 und 4 beschrieben, können auch Teile der Kupplungsvorrichtung 10 aus einem elektrisch leitenden Werkstoff bzw. Material gebildet sein. Dadurch kann in weiterer Folge über das oder die Verbindungselemente 11, gegebenenfalls unter Zwischenschaltung des Applikationselements 13, eine elektrisch leitende Verbindung zum Laufflächenbelag 17 hergestellt werden. Auch hier wäre es wiederum möglich, im Bereich des Laufflächenbelages 17 die Aufnahmeöffnung 21 vorzusehen, um in dieser das Schifell 20 und/oder den Einsatzteil 22 anzuordnen und so mit den Verbindungselementen 11 zu kontaktieren.

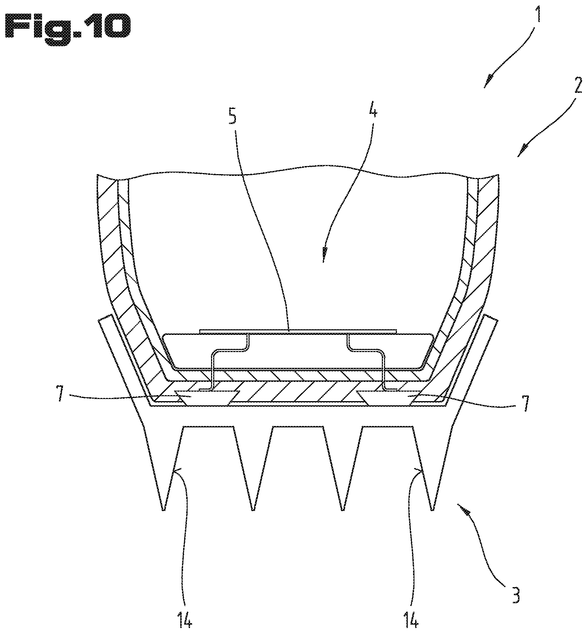

In der Fig. 10 ist eine weitere und gegebenenfalls für sich eigenständige siebte Ausführungsform des Sportsystems 1 gezeigt, wobei wiederum für gleiche Teile gleiche Bezugszeichen bzw. Bauteilbezeichnungen wie in den vorangegangenen Fig. 1 bis 9 verwendet werden. Um unnötige Wiederholungen zu vermeiden, wird auf die detaillierte Beschreibung in den vorangegangenen Fig. 1 bis 9 hingewiesen bzw. Bezug genommen.

Bei dem hier dargestellten Sportsystems 1 ist als Sportgerät 3 ein sogenanntes Steigeisen gezeigt, welches selbst zumeist aus einem elektrisch leitenden metallischen Werkstoff gebildet ist. Als Schuh 2 dient ein Bergschuh oder ein Hochtourenschuh, wobei aber auch ein Tourenschischuh oder Schischuh eingesetzt werden kann.

Im Schuhinnenraum 4 ist wiederum das Ableitungselement 5 vorgesehen, wobei im Bereich der Sohle des Schuhs 2 das bzw. die ersten Kontaktelemente 7 angeordnet bzw. ausgebildet sind. Die ersten Kontaktelemente 7 stehen elektrisch leitend mit dem Ableitungselement 5 in Kontakt.

Da, wie bereits zuvor beschrieben, das Sportgerät 3 selbst aus einem elektrisch leitenden Werkstoff gebildet ist, ist lediglich für eine Kontaktierung des oder der ersten Kontaktelemente 7 mit dem Sportgerät 3, beispielsweise einem Steg oder dergleichen, zu sorgen. Es wäre aber auch wiederum möglich, am Sportgerät 3 ein eigenes, jedoch nicht näher dargestelltes zweites Kontaktelement 16 vorzusehen, welches für eine unabhängigere Kontaktierung mit dem Sportgerät 3 sorgt.

Bei Verwendung des Schuhs 2 mit dem daran angeordneten Sportgerät 3 erfolgt so wiederum die Erdung des Benutzers ausgehend vom Schuhinnenraum 4 hin zum Sportgerät 3 und der oder den durch dieses selbst gebildeten Kontaktierungsflächen 14.

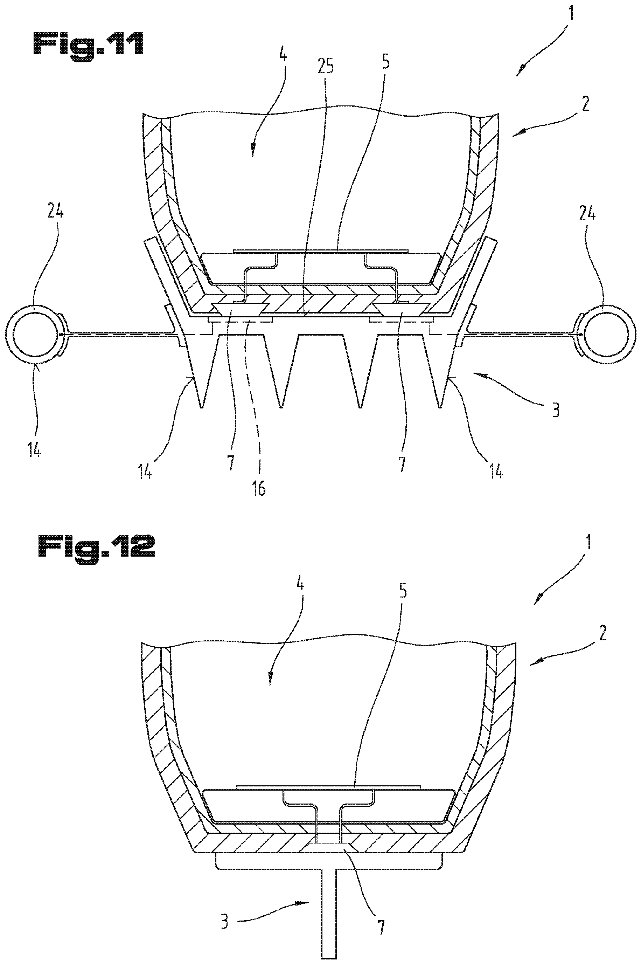

In der Fig. 11 ist eine weitere und gegebenenfalls für sich eigenständige achte Ausführungsform des Sportsystems 1 gezeigt, wobei wiederum für gleiche Teile gleiche Bezugszeichen bzw. Bauteilbezeichnungen wie in den vorangegangenen Fig. 1 bis 10 verwendet werden. Um unnötige Wiederholungen zu vermeiden, wird auf die detaillierte Beschreibung in den vorangegangenen Fig. 1 bis 10 hingewiesen bzw. Bezug genommen.

Das hier gezeigte Sportgerät 3 ist als Schneeschuh ausgebildet. Als Schuh 2 können die unterschiedlichst ausgeführten Schuhe Anwendung finden, wobei auch hier wiederum im Schuhinnenraum 4 das Ableitungselement 5 vorgesehen ist und über eine elektrische Leitungsverbindung mit den im Sohlenbereich angeordneten ersten Kontaktelementen 7 in elektrisch leitender Verbindung steht.

Die meisten Schneeschuhe weisen ebenfalls krallenartig ausgebildete und zumeist aus einem elektrisch leitenden Werkstoff gebildete Bauteile auf, welche im weitesten Sinne auch als Steigeisen bezeichnet werden können. Diese dienen dazu, bei einer härteren Schneeauflage das Abzurutschen mit den Schneeschuhen an der Oberfläche zu verhindern. Somit ist auch hier wiederum, wie dies bereits zuvor in der Fig. 10 beschrieben worden ist, eine Erdung des Benutzers ausgehend vom Ableitungselement 5 über das zumindest erste Kontaktelement 7 hin auf das krallenartig ausgebildete Bauteil des Schneeschuhs als Sportgerät 3 möglich. Die Kontaktierungsfläche 14 bilden somit zumindest die krallenförmigen Vorsprünge bzw. das gesamte krallenartig ausgebildete Bauteil, wie dies ähnlich auch bei einem Harscheisen oder dem Steigeisen der Fall ist.

Unabhängig davon wäre es aber auch noch möglich, einen äußeren Rahmenteil 24 des Sportgeräts 3 aus einem elektrisch leitenden Werkstoff auszubilden. Im Bereich einer Schuhabstützung 25 am Sportgerät 3 könnte gegenüberliegend bezüglich des oder der ersten Kontaktelemente 7 zumindest ein zweites Kontaktelement 16 angeordnet bzw. vorgesehen sein. Dieses kann beispielsweise über eine Leitung bzw. ein Kabel elektrisch leitend mit dem äußeren Rahmenteil 24 verbunden sein. Diese Ausfuhrungsform ist hier im linken Abschnitt der Fig. 11 in strichlierten Linien angedeutet. Bei diesem Ausführungsbeispiel würde dann der äußere Rahmenteil 24 zumindest bereichsweise die Kontaktierungsfläche 14 ausbilden.

Um eine noch bessere Kontaktierung mit dem Gelände zu erzielen, wäre auch eine Kombination der beiden zuvor beschriebenen Ausführungsformen zur Ausbildung der voneinander distanzierten Kontaktierungsflächen 14 möglich.

In der Fig. 12 ist eine weitere und gegebenenfalls für sich eigenständige neunte Ausführungsform des Sportsystems 1 gezeigt, wobei wiederum für gleiche Teile gleiche Bezugszeichen bzw. Bauteilbezeichnungen wie in den vorangegangenen Fig. 1 bis 11 verwendet werden. Um unnötige Wiederholungen zu vermeiden, wird auf die detaillierte Beschreibung in den vorangegangenen Fig. 1 bis 11 hingewiesen bzw. Bezug genommen.

Bei dieser hier gezeigten Ausführungsform ist das Sportgerät 3 als Eislaufkufe ausgebildet und kann beispielsweise direkt am Schuh 2 befestigt sein und so eine zusammengehörige Baueinheit als Sportsystem 1 ausbilden. Es wäre aber auch möglich, die Eislaufkufe über eine nicht näher dargestellte Kupplungsvorrichtung 10 mit der Unterseite des Schuhs 2 zu verbinden. Damit könnten am Schuh 2 je nach Anwendungsfall unterschiedliche Eislaufkufen angeordnet und damit für den Sportbetrieb verbunden werden.

Auch hier ist wiederum im Schuhinnenraum 4 das Ableitungselement 5 angeordnet bzw. vorgesehen und steht in elektrisch leitendem Kontakt mit dem im Bereich der Sohle angeordneten ersten Kontaktelement 7. Da das hier als Eislaufkufe ausgebildete Sportgerät 3 selbst aus einem elektrisch leitenden Werkstoff gebildet ist, könnte auf die zusätzliche Anordnung des zweiten Kontaktelements 16 verzichtet werden und das erste Kontaktelement 7 direkt mit dem Sportgerät 3 elektrisch leitend kontaktiert sein.

Sollte eine zusätzliche Kupplungsvorrichtung 10 vorgesehen sein, könnte auch wiederum, wie bereits zuvor beschrieben, im Bereich der Kupplungsvorrichtung 10 zumindest ein zweites Kontaktelement 16 vorgesehen sein, welches gegebenenfalls unter Zwischenschaltung von Verbindungselementen 11 mit dem kufenförmigen Sportgerät 3 verbunden und somit elektrisch leitend kontaktiert ist.

Das Sportsystem 1 mit einer entsprechenden Gestaltung oder Ausführung der Antistatikfunktion zielt in weiterer Folge auch noch darauf ab, ein Gesamtsystem zu schaffen, bei welchem nicht nur ein elektrischer Ableitungspfad vom Schuh 2, gegebenenfalls unter Zwischenschaltung der Kupplungsvorrichtung 10, zur Kontaktierungsfläche 14 des Sportgeräts 3 ausgebildet wird, sondern auch noch ein Sportbekleidungssystem 26 zu schaffen, welches ebenfalls einen durchgängig ausgebildeten elektrischen Ableitungspfad aufweist. Damit kann in Abhängigkeit von den verwendeten einzelnen Bekleidungsstücken eine elektrische Ableitung der elektrostatischen Aufladung des Körpers des Benutzers und/oder der Bekleidung über den elektrischen Ableitungspfad des Sportbekleidungssystems 26 zu seinem Schuh 2 und in weiterer Folge zur Kontaktierungsfläche 14 des Sportgeräts 3 erreicht werden. Nachfolgend sind einige mögliche Beispiele aus einer Vielzahl von denkbaren Sportbekleidungssystemen 26 gezeigt und beschrieben. Der Schuh 2 wird bei den unterschiedlichen Ausführungsbeispielen als Bestandteil des Sportbekleidungssystems 26 angesehen.

Dabei ist ein alleiniger Einsatz des Sportbekleidungssystems 26 in den zueinander unterschiedlichen Ausführungsformen möglich, wobei die elektrische Kontaktierung direkt mit dem Gelände (Erde) durch das zumindest eine erste Kontaktelement 7 des Schuhs 2 erfolgt.

Unabhängig davon oder zusätzlich dazu ist aber auch die gemeinsame Verwendung des Sportbekleidungssystems 26 mit einem der Sportgeräte 3 möglich, wobei dann die elektrische Kontaktierung mit dem Gelände (Erde) durch die zumindest eine am Sportgerät 3 angeordnete oder ausgebildete Kontaktierungsfläche 14 erfolgt.

In der Fig. 13 ist eine mögliche Ausführungsform des Sportsystems 1 gezeigt, welches das Sportbekleidungssystem 26 sowie das Sportgerät 3 umfasst. Das Sportgerät 3 ist hier nur beispielhaft dargestellt und im vorliegenden Ausführungsbeispiel durch Schi gebildet. Der Schuhinnenraum 4, welcher zur Aufnahme des Fußes eines Benutzers dient, ist elektrisch leitend mit dem zumindest einem an der Außenseite 6 des Schuhs 2 angeordneten oder ausgebildeten ersten Kontaktelementes 7 elektrisch leitend verbunden. Bei gekuppelter Stellung des Schuhs 2 über die Kupplungsvorrichtung 10 kommt das erste Kontaktelement 7 mit dem zweiten Kontaktelement 16 in elektrisch leitenden Kontakt. Am Sportgerät 3 ist zumindest eine der zuvor beschriebenen Kontaktierungsflächen 14 angeordnet oder ausgebildet.

Das gesamte Sportbekleidungssystem 26 weist bevorzugt ebenfalls eine durchgängige Antistatikfunktion auf, um so auftretende elektrostatische Aufladungen über einen durchgängigen Ableitungspfad auf das Gelände bzw. die Erde ableiten zu können. Das Sportbekleidungssystem 26 umfasst bei dieser hier komplett dargestellten Ausführungsform eine Oberbekleidung 27, den oder die Schuhe 2, einen Schutzhelm 28, gegebenenfalls eine Schutzbrille 29 sowie Finger-Bekleidungsstücke 30. Dabei sei erwähnt, dass die zuvor genannten Bestandteile bzw. Komponenten des Sportbekleidungssystems 26 nachfolgend für unterschiedliche Sportarten noch detaillierter beschrieben werden. Des Weiteren kann das Sportbekleidungssystem 26 auch noch unterschiedliche Fuß-Bekleidungsstücke 31 umfassen, welche hier nicht näher dargestellt jedoch in einer der nachfolgenden Figuren gezeigt und beschrieben werden. Darunter werden Socken, Strümpfe oder dergleichen verstanden.

Im vorliegenden Ausführungsbeispiel ist die Oberbekleidung 27 aus einem Oberkörper-Bekleidungsstück 32 sowie einem Bein-Bekleidungsstück 33 gebildet. Die Oberbekleidung wird dabei überwiegend am Rumpf, den Armen sowie den Beinen getragen.

Die Oberbekleidung 27 weist zumindest abschnittsweise zumindest eine elektrisch leitende Schicht 34 auf, welche durch eine strichlierte Kreuzschraffur schematisch angedeutet ist. Die zumindest eine elektrisch leitende Schicht 34 ist weiters über einen vereinfacht dargestellten Ableitungspfad mit dem am Schuh 2 angeordneten oder ausgebildeten Kontaktelement 7 elektrisch leitend verbunden. Auch dieser hier dargestellte Schuh 2 bzw. die Schuhe 2 weisen an deren Außenseite 6 mindestens ein daran angeordnetes oder ausgebildetes, erstes Kontaktelement 7 auf, welches mit dem im Schuh 2 aufzunehmenden Fuß des Benutzers elektrisch leitend verbindbar ist.

Ist die Oberbekleidung 27, wie im vorliegenden Ausführungsbeispiel durch das Oberkörper-Bekleidungsstück 32 sowie das Bein-Bekleidungsstück 33 gebildet, weisen beide Bekleidungsstücke 32, 33 zumindest abschnittsweise die zumindest eine elektrisch leitende Schicht 34 auf. Des Weiteren ist dann das Oberkörper-Bekleidungsstück 32 mit dem Bein-Bekleidungsstück 33, insbesondere jeweils dessen elektrisch leitenden Schichten 34 miteinander elektrisch leitend verbunden, wie dies mit einer durch einen Strich angedeuteten Verbindungsleitung 35 erfolgen kann. Damit ist eine direkte elektrische Leitungsverbindung als Ableitungspfad vom Oberkörper-Bekleidungsstück 32 hin zum Bein-Bekleidungsstück 33, beispielsweise der Hose, geschaffen.

Ausgehend von der Oberbekleidung 27, insbesondere dem Bein-Bekleidungsstück 33, kann der elektrische Ableitungspfad hin zum ersten Kontaktelement 7 des Schuhs 2 ausgebildet sein.

Im linken Bereich des Bein-Bekleidungsstücks 33 ist ein mögliches Ausführungsbeispiel gezeigt, bei welchem die elektrisch leitende Verbindung ausgehend von der Oberbekleidung 27 über den im Schuh 2 aufgenommenen und zumindest abschnittsweise elektrisch leitend ausgebildeten Innenschuh 9 zum ersten Kontaktelement 7 erfolgt. Dazu kann auch hier wiederum die Leitungsverbindung über die Verbindungsleitung 35 erfolgen. Dabei sei erwähnt, dass die Verbindungsleitung 35 zwischen den unterschiedlichsten Bekleidungsstücken angeordnet oder ausgebildet sein kann.

Im Bereich des rechts dargestellten Stummels des Bein-Bekleidungsstücks 33 ist eine weitere Verbindungsmöglichkeit zur Ausbildung des Ableitungspfades von der Oberbekleidung 27 hin zum ersten Kontaktelement 7 gezeigt. Dazu erstreckt sich die Verbindungsleitung 35 ausgehend von der Oberbekleidung 27, insbesondere dessen leitenden Schicht 34, hin zu dem im Schuhinnenraum 4 angeordneten Ableitungselement 5. Im vorliegenden Ausführungsbeispiel kann das Ableitungselement 5 beispielsweise durch die Innensohle gebildet sein. Die Innensohle ist dabei ebenfalls elektrisch leitend ausgebildet und steht ihrerseits in weiterer Folge mit dem ersten Kontaktelement 7 des Schuhs 2 in elektrischer Leitungsverbindung.

Als weiteres Kleidungsstück bzw. Bekleidungsstück des Sportbekleidungssystem 26 kann dieses auch noch die Finger-Bekleidungsstücke 30 umfassen. So können die Finger-Bekleidungsstücke 30 zumindest abschnittsweise zumindest eine elektrisch leitende Schicht 36 aufweisen oder durch diese elektrisch leitende Schicht 36 gebildet sein, wie dies in einem Teilabschnitt angedeutet ist. Die elektrisch leitende Schicht 36 des Finger-Bekleidungsstücks 30 kann wiederum mit unterschiedlichst ausgebildeten Leitungsverbindungen den Ableitungspfad hin zur Oberbekleidung 27 ausbilden.

Im linken Bereich des Ärmels des Ober-Bekleidungsstücks 32 ist dargestellt, dass die zumindest eine elektrisch leitende Schicht 36 des Finger-Bekleidungsstücks 30 über die Verbindungsleitung 35 elektrisch leitend mit der Oberbekleidung 27, insbesondere mit deren elektrisch leitend ausgebildeten Schicht 34 verbunden ist.

Ist das Finger-Bekleidungsstück 30 selbst durch die elektrisch leitende Schicht 36 ausgebildet, kann auf die gesonderte Anordnung der Verbindungsleitung 35 verzichtet werden, wobei dann die elektrisch leitende Verbindung zur Ausbildung des Ableitungspfades über einen elektrisch leitend ausgebildeten Ärmelabschluss 37 hin zur elektrisch leitenden Schicht 34 der Oberbekleidung 27 erfolgt. Dazu ist der Ärmelabschluss 37 an der Innenseite des Ärmels mit der elektrisch leitend ausgebildeten Schicht 34 versehen oder durch diese gebildet. Die elektrisch leitende Schicht 34 des Ärmelabschlusses 37 steht ihrerseits in elektrisch leitender Verbindung mit der Schicht 34 der Oberbekleidung 27, insbesondere des Oberkörper-Bekleidungsstücks 33.

Wie bereits zuvor beschrieben, kann das Sportbekleidungssystem 26 auch noch den Schutzhelm 28 umfassen. Um auch hier eine elektrisch leitende Verbindung zur Bildung des Ableitungspfades zu schaffen, kann der Schutzhelm 28 an seiner äußeren Oberfläche 38 zumindest abschnittsweise mit einer elektrisch leitenden Schicht 39 versehen oder damit ausgestattet sein. Im rechten Schulterbereich der Oberbekleidung 27 ist noch vereinfacht dargestellt, dass auch die elektrisch leitend ausgebildete Schicht 39 des Schutzhelms 28 über zumindest eine Verbindungsleitung 35 elektrisch leitend mit der Oberbekleidung 27, insbesondere dessen elektrisch leitenden Schicht 34, verbunden ist.

Die Schutzbrille 29 kann ein Brillenband 40 oder Brillenbügel umfassen. Das Brillenband 40 oder die Brillenbügel können ebenfalls elektrisch leitend ausgebildet sein und stehen im bestimmungsgemäßen Gebrauch mit der an der äußeren Oberfläche 38 des Schutzhelms 28 angeordneten oder ausgebildeten elektrisch leitenden Schicht 39 in elektrisch leitender Verbindung. Damit wird es möglich, von der Schutzbrille 29, insbesondere deren Brillengläsern, über das Brillenband 40 oder die Brillenbügel eine durchgehende elektrisch leitende Verbindung zur Bildung des Ableitungspfades bis hin zum elektrisch leitend ausgebildeten ersten Kontaktelement 7 des Schuhs 2 herstellen zu können.

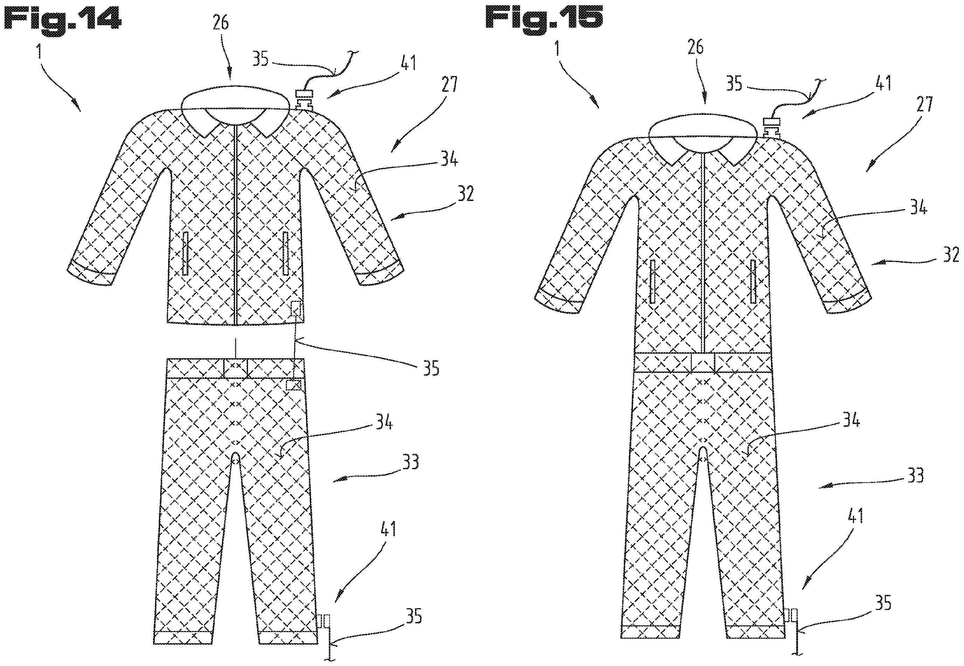

In den Fig. 14 und 15 sind zwei mögliche Ausbildungen der Oberbekleidung 27 zur Bildung des Sportbekleidungssystems 26 gezeigt, wobei wiederum für gleiche Teile gleiche Bezugszeichen bzw. Bauteilbezeichnungen wie in den vorangegangenen Fig. 1 bis 13 verwendet werden. Um unnötige Wiederholungen zu vermeiden, wird auf die detaillierte Beschreibung in den vorangegangenen Fig. 1 bis 13 hingewiesen bzw. Bezug genommen. Der Unterschied besteht lediglich darin, dass in der Fig. 14 eine zweiteilige und in der Fig. 15 eine einteilige Ausbildung der Oberbekleidung 27 gezeigt und beschrieben ist.

Die in den beiden Fig. 14 und 15 dargestellte Oberbekleidung 27 weist zumindest wiederum die zuvor beschriebene elektrisch leitende Schicht 34 auf oder ist durch diese gebildet. Im Falle einer zweiteiligen Ausbildung der Oberbekleidung 27, nämlich dem eigenen Oberkörper-Bekleidungsstück 32 sowie dem eigenen Bein-Bekleidungsstück 33, erfolgt die elektrische Verbindung zwischen diesen beiden Bekleidungsstücken 32, 33 durch die Verbindungsleitung 35. Dabei sei erwähnt, dass die Verbindungsleitung 35 nur schematisch angedeutet ist und durch jede beliebig ausgebildete Ausführungsform realisiert werden kann. Zur Herstellung der Verbindungsleitung 35, insbesondere deren Kontaktierung mit den im Oberkörper-Bekleidungsstück 32 sowie dem Bein-Bekleidungsstück 33 angeordneten elektrisch leitenden Schichten 34 können dazu entsprechende aus dem Stand der Technik bekannte elektrische Steck- und/oder Kupplungsverbindungen Verwendung finden.

Im Bereich der rechten Schulter der Oberbekleidung 27, insbesondere des Oberkörper-Bekleidungsstücks 32 ist noch dargestellt, dass, falls der Schutzhelm 28 gegebenenfalls mit der Schutzbrille 29 für die Sportausübung mitverwendet werden soll, eine für die Herstellung der elektrischen Leitungsverbindung ausgebildete elektrisch leitende Verbindungsvorrichtung 41 angeordnet oder ausgebildet sein kann. Die Verbindungsvorrichtung 41 kann beispielsweise durch eine Steckverbindung oder dergleichen gebildet sein, mit welcher die mit dem Schutzhelm 28 in Verbindung stehende Verbindungsleitung 35 elektrisch leitend verbunden, insbesondere gekuppelt werden kann.

Im Bereich des Beinabschlusses ist ebenfalls vereinfacht die Verbindungsleitung 35 zur Verbindung mit dem Schuh 2 und/oder dem Innenschuh 9 angedeutet. Auch hier kann wieder eine entsprechend ausgebildete elektrische Verbindungsvorrichtung 41 angeordnet oder ausgebildet sein. Gleiches gilt aber auch für die gegenseitige Verbindung zwischen dem Oberkörper-Bekleidungsstück 32 und dem Bein-Bekleidungsstück 33. Die elektrisch leitende Schicht 34 ist auch hier durch eine vereinfacht angedeutete Kreuzschraffur dargestellt.

Im Gegensatz zur Ausbildung der Fig. 14 ist in der Fig. 15 die Oberbekleidung 27 einteilig, also in Form eines Overalls oder dergleichen, ausgebildet. Damit kann die gesonderte elektrische Verbindungsleitung 35 zwischen dem Oberkörper-Bekleidungsstück 32 und dem Bein-Bekleidungsstück 33 entfallen. Dies bedingt, dass die elektrisch leitende Schicht 34 bevorzugt vollflächig durchgehend an der Oberbekleidung 27 ausgebildet ist. Im Bereich des hier rechts dargestellten Bein- Bein-Bekleidungsstücks 33 der Oberbekleidung 27 ist noch vereinfacht die elektrische Verbindungsvorrichtung 41 mit der daran angeschlossenen Verbindungsleitung 35 für die weitere elektrisch leitende Verbindung hin zum ersten Kontaktelement 7 dargestellt.

Die hier in den beiden Fig. 14 und 15 dargestellte Oberbekleidung 27 kann beispielsweise für den alpinen Schilauf, den Tourenschilauf, für Expeditionen oder dergleichen Anwendung finden.

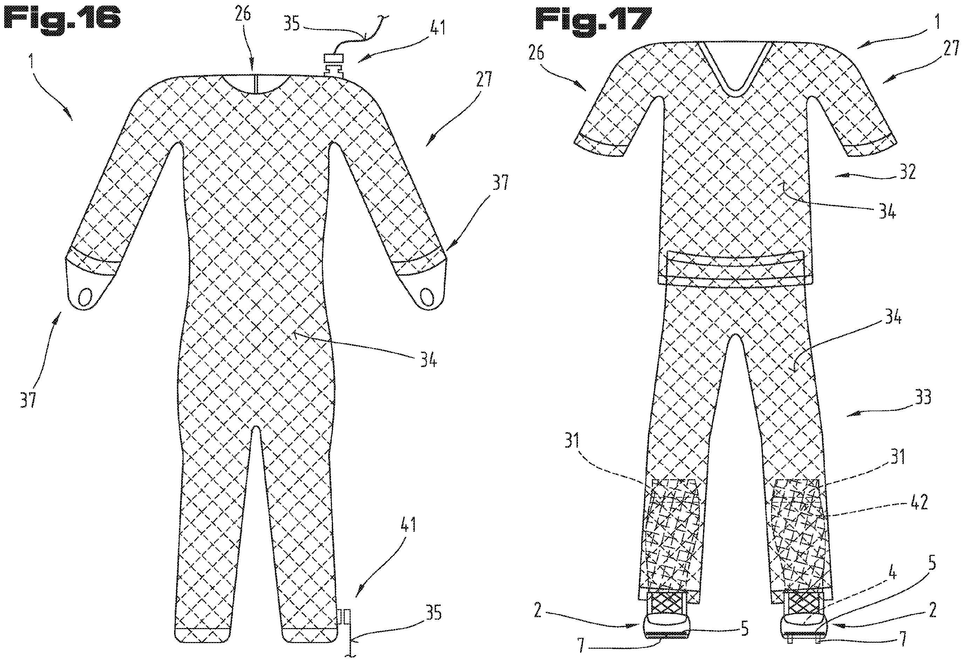

In der Fig. 16 ist eine weitere mögliche Ausbildung der Oberbekleidung 27 zur Bildung des Sportbekleidungssystems 26 gezeigt, wobei wiederum für gleiche Teile gleiche Bezugszeichen bzw. Bauteilbezeichnungen wie in den vorangegangenen Fig. 1 bis 15 verwendet werden. Um unnötige Wiederholungen zu vermeiden, wird auf die detaillierte Beschreibung in den vorangegangenen Fig. 1 bis 15 hingewiesen bzw. Bezug genommen.

Die hier dargestellte Ausbildung der Oberbekleidung 27 ist dabei ähnlich ausgebildet, wie die zuvor in der Fig. 15 beschriebene Ausführung. Die Oberbekleidung 27 ist dabei einteilig ausgebildet und weist die zumindest eine leitende Schicht 34 auf. Diese kann sich wiederum vollflächig über die gesamte Oberbekleidung 27 erstrecken. Dabei ist es vorteilhaft, wenn die elektrisch leitende Schicht 34 selbst die Oberbekleidung 27 ausbildet.

Im Bereich der hier rechts dargestellten Schulter ist wiederum die zuvor beschriebene Verbindungsvorrichtung 41 angeordnet bzw. ausgebildet, wobei diese über die Verbindungsleitung 35 gegebenenfalls mit dem Schutzhelm 28 und/oder der Schutzbrille 29 verbunden werden kann.

Diese hier dargestellte Oberbekleidung 27 kann beispielsweise für den alpinen Rennlauf, bei Tourenrennläufen sowie für den Bob- sowie Rodelsport oder ähnliche Sportarten Anwendung finden. Weiters ist hier noch dargestellt, dass im Bereich des Ärmelabschlusses 37 zusätzliche Halteschlaufen, insbesondere für den Daumen angeordnet oder ausgebildet sind. Dadurch kann eine bessere Fixierung des Ärmels am Arm, insbesondere dem Daumen des Benutzers erreicht werden.

Weiters ist hier noch im Bereich des rechts dargestellten Beins gezeigt, dass auch hier wiederum die Verbindungsvorrichtung 41 mit der daran anschließbaren Verbindungsleitung 35 angeordnet bzw. vorgesehen sein kann. Damit kann über die Schicht 34 eine entsprechende elektrische Leitungsverbindung hin zum ersten Kontaktelement 7 des Schuhs 2 hergestellt werden.

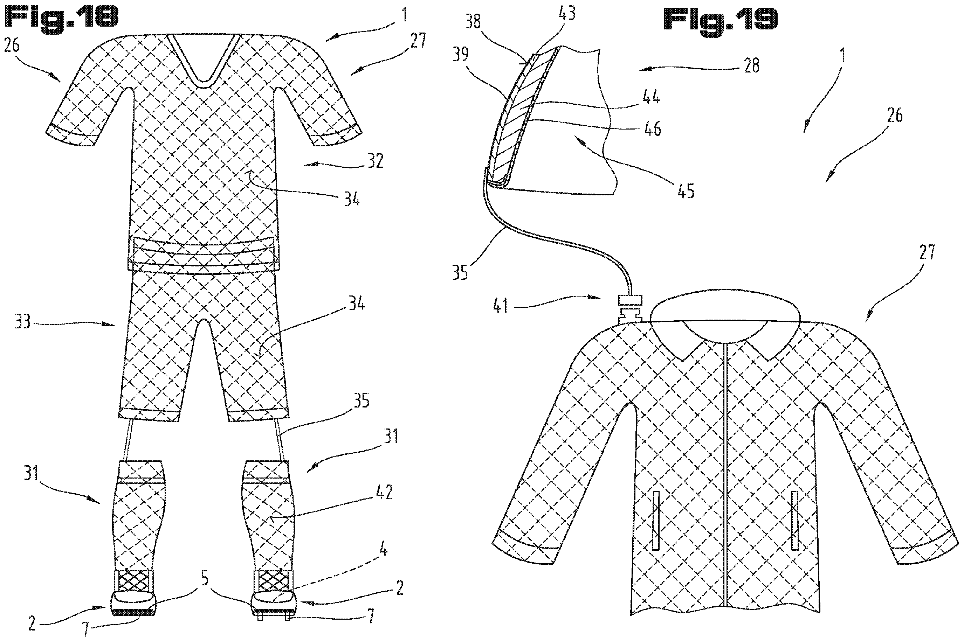

In den Fig. 17 und 18 sind zwei weitere mögliche Ausbildungen des Sportbekleidungssystems 26 umfassend die Oberbekleidung 27, Fuß-Bekleidungsstücke 31 sowie Schuhe 2 gezeigt, wobei wiederum für gleiche Teile gleiche Bezugszeichen bzw. Bauteilbezeichnungen wie in den vorangegangenen Fig. 1 bis 16 verwendet werden. Um unnötige Wiederholungen zu vermeiden, wird auf die detaillierte Beschreibung in den vorangegangenen Fig. 1 bis 16 hingewiesen bzw. Bezug genommen.

Die hier dargestellten Ausbildungen der Oberbekleidung 27 weisen dabei jeweils eine zweiteilige Form auf und umfassen das Oberkörper-Bekleidungsstück 32 sowie das Bein-Bekleidungsstück 33. Die beiden die Oberbekleidung 27 bildenden Bekleidungsstücke 32 und 33 sind dabei selbst durch die elektrisch leitende Schicht 34 gebildet. Damit kann eine Kontaktierung in Form der Verbindungsleitung 35 zwischen dem Oberkörper-Bekleidungsstück 32 und dem Bein-Bekleidungsstück 33 entfallen. Die Fuß-Bekleidungsstücke 3 1 können als Socke oder Stutzen ausgebildet sein. Auch dieses Material zur Bildung der Fuß-Bekleidungsstücke 31 kann selbst elektrisch leitend durch eine weitere elektrisch leitend ausgebildete Schicht 42 gebildet sein. Damit kann auch eine direkte Kontaktierung des Fuß-Bekleidungsstücks 31 mit dem im Schuhinnenraum 4 angeordneten elektrischen Ableitungselement 5 erfolgen.

In dem in der Fig. 17 dargestellten Ausführungsbeispiel ist das Bein-Bekleidungsstück 33 als Hose mit langen Beinen ausgebildet. Diese Ausführungsform kann auch als "Longpant" bezeichnet werden.

Im Gegensatz dazu ist in der Fig. 18 das Bein-Bekleidungsstück 33 als Hose mit kurzen Hosenstummeln ausgebildet. Diese Ausführung kann im Sportbereich als sogenannte "Short-Hose" bezeichnet werden.

Da gemäß der Fig. 17 sowohl das Bein-Bekleidungsstück 33 als auch das Fuß-Bekleidungsstück 31 selbst elektrisch leitend ausgebildet sind, kann auch hier auf eine Anordnung von Verbindungsleitungen 35 verzichtet werden.

Im Gegensatz dazu ist, wie dies nun in der Fig. 18 dargestellt ist, zwischen den kurzen Hosenstummeln des Bein-Bekleidungsstücks 33 und den Fuß-Bekleidungsstücken 31 jeweils eine Verbindungsleitung 35 durch Doppelstriche angedeutet. Dabei kann es sich beispielsweise um direkt am Körper des Benutzers angeordnete, insbesondere aufgeklebte, elektrische Verbindungsleitungen handeln. Diese stellen dann sicher, dass ein durchgängiger Ableitungspfad ausgehend vom Oberkörper-Bekleidungsstück 32 hin zum ersten Kontaktelement 7 des Schuhs 2 hergestellt werden kann.

Des Weiteren ist im Bereich der Schuhe 2 bei den beiden Fig. 17 und 18 jeweils der rechts dargestellte Schuh 2 mit Spikes oder Stoppeln ausgebildet, welche jeweils über die Sohle des Schuhs 2 vorragen. Diese Spikes oder Stoppeln stellen bei einer Ausbildung das erste Kontaktelement 7 dar oder bilden dieses aus.

Bei den in den beiden Fig. 17 und 18 jeweils links dargestellten Schuhen 2 sind keine Spikes bzw. Stoppeln vorgesehen, sondern es ist zumindest ein Teilabschnitt der Sohle des Schuhs 2 elektrisch leitend ausgebildet. Dieser zumindest elektrisch leitende Teilabschnitt der Sohle bildet das erste Kontaktelement 7 aus.

Damit kann auch bei keiner zusätzlichen Verwendung eines Sportgeräts 3 stets ein durchgängiger elektrisch leitender Ableitungspfad ausgebildet werden.

Das in den Fig. 17 und 18 dargestellte Sportbekleidungssystem 26 kann für die unterschiedlichsten Ballsportarten, wie beispielsweise Fußball, Rugby, Football, Golf, Cricket oder Baseball Anwendung finden. Dieses kann aber auch für Tennis, Badminton, Squash, Hallenfußball, Handball, Basketball oder dergleichen eingesetzt werden. Es kann aber bei für andere, hier nicht explizit angeführte Sportarten angewendet werden.

In der Fig. 19 ist eine weitere mögliche Ausbildung der Oberbekleidung 27 zur Bildung des Sportbekleidungssystems 26 gezeigt, wobei wiederum für gleiche Teile gleiche Bezugszeichen bzw. Bauteilbezeichnungen wie in den vorangegangenen Fig. 1 bis 18 verwendet werden. Um unnötige Wiederholungen zu vermeiden, wird auf die detaillierte Beschreibung in den vorangegangenen Fig. 1 bis 18 hingewiesen bzw. Bezug genommen.

Dieses hier dargestellte Ausführungsbeispiel des Sportsystems 1, insbesondere dessen Sportbekleidungssystem 26, zeigt einen Teil der Oberbekleidung 27 sowie einen Teil des Schutzhelms 28, welcher im Schnitt sowie vergrößert dargestellt worden ist.

Die Oberbekleidung 27 kann dabei ausgebildet sein, wie diese bereits zuvor in den Fig. 13 bis 16 dargestellt und beschrieben worden ist. Dabei ist jede mögliche Kombination mit den dort unterschiedlich ausgebildeten Oberbekleidungen 27 möglich.

Der Schutzhelm 28 kann einen unterschiedlichen Aufbau aufweisen, wobei bei diesem hier gezeigten Ausführungsbeispiel dieser durch eine äußere Helmschale 43, gegebenenfalls eine Schicht aus einem Dämpfungsmaterial 44, sowie eine einem Kopfaufnahmeraum 45 zugewendete elektrisch leitend ausgebildete Schicht 46 gebildet sein kann. Die elektrisch leitende Schicht 46 kann dabei mit dem Dämpfungsmaterial 44 verbunden sein. Durch das beidseitige Anordnen der elektrisch leitenden Schichten 39 sowie 46 kann eine elektrostatische Aufladung sowohl von der äußeren Oberfläche 38 als auch vom Bereich des Kopfaufnahmeraums 45 über die elektrische Verbindungsleitung 35, gegebenenfalls unter Zwischenschaltung der elektrischen Verbindungsvorrichtung 41 und der Oberbekleidung 27, insbesondere dessen leitende Schicht 34 abgeleitet werden.

Die elektrische Kontaktierung des Schutzhelms 28 sowie der gegebenenfalls daran angeordneten Schutzbrille 29 mit dem elektrisch leitend ausgebildeten Brillenband 40 kann beispielsweise für den alpinen Schi- sowie Tourenlauf, das Snowboarden, bei Expeditionen, beim Bobsport, bei Skeleton sowie Rodelsport Anwendung finden.

Die zuvor beschriebene elektrisch leitende Schicht 39 kann je nach Bedarf aus den unterschiedlichsten Werkstoffen gebildet sein. So wäre es auch möglich, die Schicht 39 aus einem elektrisch leitfähig ausgebildeten Lack und/oder einer Kunststoffschicht mit elektrisch leitenden Eigenschaften zu bilden. Die dem Kopfaufnahmeraum 45 zugewendete elektrisch leitend ausgebildete Schicht 46 kann aus einem textilen, flächig ausgebildeten Bauteil gebildet sein. Das textile Bauteil kann beispielsweise auch durch eine sogenannte Abstandsstruktur, insbesondere ein Abstandsgestrick, gebildet sein. Weiters könnte dieses aber auch durch einlagige und/oder mehrlagige Gewebe, Gewirke, Gestricke, Vliese oder dergleichen gebildet sein.

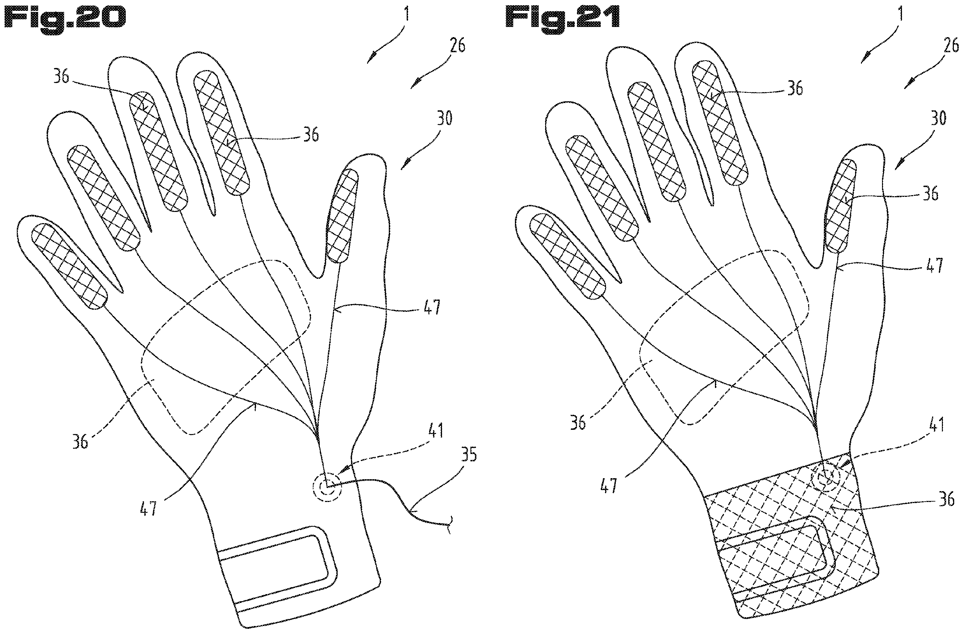

In den Fig. 20 und 21 sind zwei weitere mögliche Ausbildungen des Sportbekleidungssystems 26, nämlich unterschiedliche Ausführungsformen von Finger-Bekleidungsstücken 30 gezeigt, wobei wiederum für gleiche Teile gleiche Bezugszeichen bzw. Bauteilbezeichnungen wie in den vorangegangenen Fig. 1 bis 19 verwendet werden. Um unnötige Wiederholungen zu vermeiden, wird auf die detaillierte Beschreibung in den vorangegangenen Fig. 1 bis 19 hingewiesen bzw. Bezug genommen. Das von Finger-Bekleidungsstück 30 kann durch einen Handschuh, Fäustlinge oder dergleichen gebildet sein.

Wie bereits zuvor in der Fig. 13 beschrieben, kann das Finger-Bekleidungsstück 30 selbst durch die elektrisch leitende Schicht 36 gebildet sein. Deshalb wird auf eine detaillierte Darstellung des Finger-Bekleidungsstücks 30 für diese Ausführungsform verzichtet. Wesentlich ist bei dieser Ausführungsform, dass sowohl die Innenfläche als auch die Außenfläche des Finger-Bekleidungsstücks 30 durchgängig die elektrisch leitende Schicht 36 aufweist und/oder durch diese gebildet ist. Sind beispielsweise zwei durchgängig ausgebildete elektrisch leitende Schichten 36 vorgesehen und zwischen diesen eine Isolierschicht angeordnet, sind die beiden elektrisch leitenden Schichten 36, welche an der Innenfläche sowie der Außenflächen angeordnet sind oder ausbilden, miteinander zu kontaktieren.

Das in der Fig. 20 dargestellte Finger-Bekleidungsstück 30 kann ebenfalls Bestandteil des Sportbekleidungssystems 26 zur Bildung des Sportsystems 1 sein.

Im Gegensatz zu der zuvor nur beschriebenen Ausführungsform des Finger-Bekleidungsstücks 30 ist bei dieser hier dargestellten Ausführungsform vorgesehen, dass an der der Handfläche des Benutzers zugewendeten Seite des Finger-Bekleidungsstücks 30 nur abschnittsweise die elektrisch leitenden Schichten 36 angeordnet oder ausgebildet sind. Dabei können die über die Oberfläche verteilt angeordneten elektrisch leitenden Schichten 36 beispielsweise nur an den Fingerinnenseiten und/oder im Bereich der Handfläche angeordnet oder ausgebildet sein. Im Handgelenkbereich des Finger-Bekleidungsstücks 30 ist weiters dargestellt, dass die zuvor beschriebene elektrische Verbindungsvorrichtung 41 angeordnet sein kann. Ausgehend von dieser kann über die Verbindungsleitung 35 ein entsprechender elektrischer Ableitungspfad hin zur Oberbekleidung 27, insbesondere dessen elektrisch leitenden Schicht 34, hergestellt werden.

Die über die Oberfläche verteilt angeordneten elektrisch leitenden Schichten 36 sind im vorliegenden Ausführungsbeispiel über eigene Kontaktierungsleitungen 47 mit der Verbindungsvorrichtung 41 elektrisch leitend verbunden. Die Anordnung sowie Ausbildung der Kontaktierungsleitungen 47 kann beliebig erfolgen, wobei jedoch bevorzugt eine Anordnung innerhalb des Material zur Bildung der Finger-Bekleidungsstücke 30 gewählt wird.

Bei dem in der Fig. 21 dargestellten Ausführungsbeispiel des Finger-Bekleidungsstücks 30 ist lediglich die Art der Kontaktierung von den im Bereich der Handfläche verteilt angeordneten elektrisch leitenden Schichten 36 hin zum Kleidungsstück der Oberbekleidung 27, insbesondere dem Oberkörper-Bekleidungsstück 32, zu dem in der Fig. 20 beschriebenen Ausführungsbeispiel unterschiedlich gewählt. Bei dem Ausführungsbeispiel der Fig. 21 ist der Handgelenksbereich des Finger-Bekleidungsstücks 30 im Bereich seiner Außenfläche ebenfalls mit der elektrisch leitenden Schicht 36 versehen oder durch diese gebildet. Die im Bereich der Handfläche und/oder der Finger angeordneten elektrisch leitenden Schichten 36 stehen wieder über die Kontaktierungsleitungen 47 mit der im Handgelenksbereich angeordneten elektrisch leitenden Schicht 36 in elektrisch leitender Verbindung. Dabei ist es möglich, die einzelnen Kontaktierungsleitungen 47 direkt mit der im Handgelenksbereich angeordneten oder ausgebildeten elektrisch leitenden Schicht 36 elektrisch leitend zu verbinden. Es wäre aber auch möglich, auch hier die elektrisch leitende Verbindungsvorrichtung 41 vorzusehen, welche einerseits mit den Kontaktierungsleitungen 47 und andererseits mit der im Handgelenksbereich angeordneten elektrisch leitenden Schicht 36 elektrisch leitend verbunden ist. Die Verbindungsvorrichtung 41ist in strichlierten Linien vereinfacht dargestellt.

Mit dem in der Fig. 21 dargestellten Finger-Bekleidungsstück 30 kann die Kontaktierung zum Kleidungsstück der Oberbekleidung 27, insbesondere dem Oberkörper-Bekleidungsstück 32, so erfolgen, wie dies in der Fig. 13 im Bereich des rechts dargestellten Ärmels gezeigt ist.

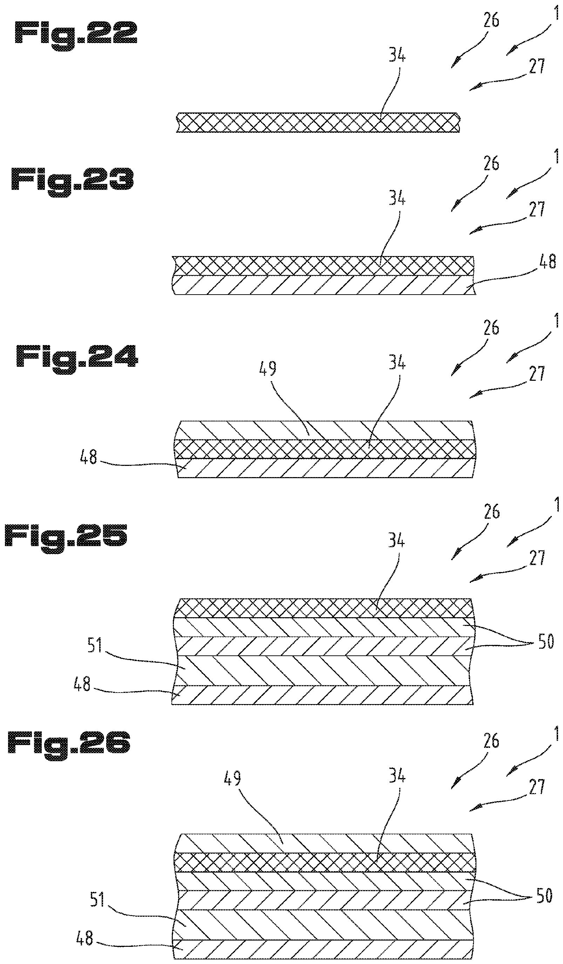

In den Fig. 22 bis 26 sind unterschiedliche Ausbildungen und Anordnungsmöglichkeiten der elektrisch leitenden Schicht 34 zur Bildung von Bekleidungsstücken der Oberbekleidung 27, insbesondere von Oberkörper-Bekleidungsstücken 32 und/oder Bein-Bekleidungsstücken 33, gezeigt, wobei wiederum für gleiche Teile gleiche Bezugszeichen bzw. Bauteilbezeichnungen wie in den vorangegangenen Fig. 1 bis 21 verwendet werden. Um unnötige Wiederholungen zu vermeiden, wird auf die detaillierte Beschreibung in den vorangegangenen Fig. 1 bis 21 hingewiesen bzw. Bezug genommen.

Bei dem in der Fig. 22 dargestellten Ausführungsbeispiel ist das Material zur Bildung des Bekleidungsstücks der Oberbekleidung 27 selbst durch die elektrisch leitende Schicht 34 gebildet. Damit kann sowohl ausgehend vom Benutzer und damit der Innenseite des Materials, als auch von der Außenseite des Materials eine durchgängiger elektrischer Ableitungspfad geschaffen werden. Bei diesem Ausführungsbeispiel kann die elektrisch leitend ausgebildete Schicht 34 auch als Obermaterial bezeichnet werden.

Bei dem in der Fig. 23 dargestellten Ausführungsbeispiel ist die zumindest eine elektrisch leitende Schicht 34 der Oberbekleidung 27 auf einer dem Benutzer zuwendbaren Innenseite zumindest abschnittsweise von einem Innenmaterial 48 unterlegt. Der Werkstoff des Innenmaterials 48 kann beliebig gewählt werden, wobei dieser keine elektrisch leitenden Eigenschaften aufweist. Auch bei diesem hier gezeigten Ausführungsbeispiel bildet die elektrisch leitend ausgebildete Schicht 34 das Obermaterial des Bekleidungsstücks der Oberbekleidung 27.

Bei dem in der Fig. 24 dargestellten Ausführungsbeispiel bildet die zumindest eine elektrisch leitende Schicht 34 der Oberbekleidung 27 nicht das Obermaterial des Bekleidungsstücks. So ist hier die zumindest eine elektrisch leitend ausgebildete Schicht 34 der Oberbekleidung 27 von einer Außenschicht 49 abgedeckt. Die zumindest eine elektrisch leitend ausgebildete Schicht 34 kann gegebenenfalls auch noch auf der von der Außenschicht 49 abgewendeten Innenseite zumindest abschnittsweise von dem zuvor beschriebenen Innenmaterial 48 unterlegt sein.

Die in den Fig. 22 bis 24 beschriebenen Ausführungsformen des Schichtaufbaus zur Bildung von Bekleidungsstücken der Oberbekleidung 27 werden zumeist im alpinen Rennsport, Bobsport, Skeletonsport, Rodelsport sowie gegebenenfalls beim Langlaufsport verwendet.

Bei dem in den Fig. 25 und 26 dargestellten Ausführungsbeispiel ist ein mehrschichtiger Aufbau zur Bildung von Bekleidungsstücken der Oberbekleidung 27, insbesondere von Oberkörper-Bekleidungsstücken 32 und/oder Bein-Bekleidungsstücken 33, gezeigt. Bedingt durch den mehrschichtigen bzw. mehrlagigen Aufbau können insbesondere bei Wintersportarten bessere Isolier- und/oder Dämpfungseigenschaften erzielt werden.

Bei dem in der Fig. 25 dargestellten Ausführungsbeispiel ist die Außenschicht und somit das Obermaterial durch die elektrisch leitende Schicht 34 gebildet. Die dem Körper zugewendete innerste Lage bildet wiederum das Innenmaterial 48. Auf der dem Innenmaterial 48 zugewendeten Seite des durch die elektrisch leitende Schicht 34 ausgebildeten Obermaterials kann eine, bevorzugt aber auch mehrere Zwischenschichten 50 angeordnet sein. Dabei kann es sich um unterschiedliche "Blocker-Schichten" handeln. Diese können beispielsweise für den Benutzer bei Einwirkung von für Luftströmung und/oder Feuchtigkeit einen Schutz bewirken.

Zusätzlich ist hier noch gezeigt, dass auf der der elektrisch leitenden Schicht 34 zugewendeten Seite des Innenmaterials 48 zumindest eine Isolierschicht 51 angeordnet sein kann. Damit wird ein Schichtaufbau ausgehend vom Obermaterial, nämlich der elektrisch leitenden Schicht 34, der zumindest eine Zwischenschicht 50, der Isolierschicht 51 sowie dem Innenmaterial 48 geschaffen.

Bei dem in der Fig. 26 dargestellten Ausführungsbeispiel ist noch gezeigt, dass der Schichtaufbau zur Bildung von Bekleidungsstücken der Oberbekleidung 27 dieser gleichartig gewählt ist, wie zuvor in der Fig. 25 beschrieben ist. Die zuvor das Obermaterial bildende elektrisch leitende Schicht 34 ist hier noch zusätzlich von der Außenschicht 49 abgedeckt, welche im vorliegenden Ausführungsbeispiel das Obermaterial bildet. Der gesamte Schichtaufbau umfasst somit ausgehend vom Obermaterial hin zur Innenseite die Außenschicht 49, die elektrisch leitend ausgebildete Schicht 34, zumindest eine Zwischenschicht 50, die Isolierschicht 51 sowie das Innenmaterial 48 als innerste Schicht bzw. Lage. Diese kann auch als Futterlage bezeichnet werden.

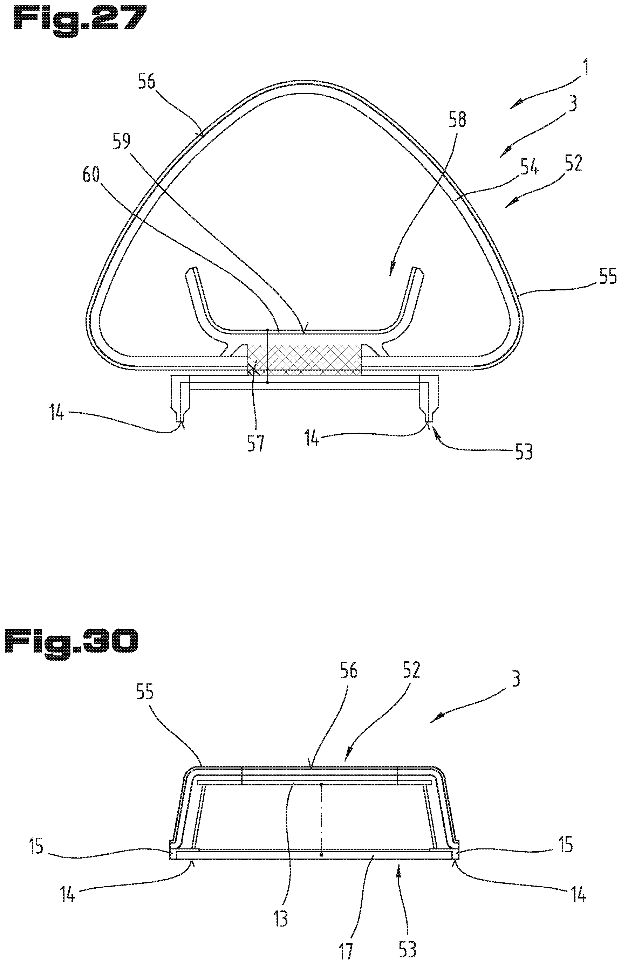

In den Fig. 27 bis 33 sind mögliche Ausbildungen von unterschiedlichen Sportgeräten 3 zur Bildung des Sportsystems 1 gezeigt, wobei hier auch eine kombinierte Verwendung mit dem Sportbekleidungssystem 26 vorteilhaft ist. Auch hier werden wiederum für gleiche Teile gleiche Bezugszeichen bzw. Bauteilbezeichnungen wie in den vorangegangenen Fig. 1 bis 26 verwendet. Um unnötige Wiederholungen zu vermeiden, wird auf die detaillierte Beschreibung in den vorangegangenen Fig. 1 bis 26 hingewiesen bzw. Bezug genommen. Auch diese nachfolgenden weiteren Sportgeräte 3 weisen eine Antistatikfunktion auf und sind somit ebenfalls mit einem elektrisch leitenden Ableitungspfad ausgestattet. Damit kann eine Erdung erzielt werden.

Um auch einem Benutzer während der Benutzung von unterschiedlichsten Sportgeräten 3 erden und damit einen elektrisch leitenden Ableitungspfad zu schaffen, sind beispielhaft noch weitere Sportgeräte 3 zusätzlich zu den bereits zuvor in den Fig. 1 bis 12 dargestellten Sportgeräten 3 gezeigt und beschrieben. Da bei diesen nachfolgend beschriebenen Sportgeräten 3 zumeist keine direkte Kontaktierung ausgehend vom Benutzer über den oder die Schuhe 2 hin zum Sportgerät 3 und dessen Kontaktierungsfläche 14 erfolgen kann, sind hier weitere Möglichkeiten zur Bildung des elektrischen Ableitungspfades beispielhaft angeführt.

Die Fig. 27 zeigt das Sportgerät 3 in Form eines Bobschlittens, welcher auch als "Bobsleigh" bezeichnet werden kann. Je nach Anzahl der Personen ist auch die Größe des Bobschlittens ausgebildet. Das als Bobschlitten ausgebildete Sportgerät 3 umfasst bei diesem Ausführungsbeispiel einen Grundkörper 52 und zumindest ein am Grundkörper 52 angeordnetes oder ausgebildetes Basiselement 53. Dabei dient das Basiselement 53 zumindest zeitweise während des Gebrauchs durch den Benutzer dazu, um auf einem Gelände abgestützt zu werden.

Im vorliegenden Ausführungsbeispiel umfasst der Grundkörper 52 zumindest ein Verkleidungselement 54 sowie nicht näher dargestellte Streben, Versteifungsteile sowie Verbindungskomponenten. Der Grundkörper 52, im vorliegenden Ausführungsbeispiel das Verkleidungselement 54, weist zumindest abschnittsweise zumindest eine elektrisch leitende Schicht 55 auf oder ist zumindest abschnittsweise durch die elektrisch leitende Schicht 55 gebildet. Dabei ist bevorzugt die elektrisch leitende Schicht 55 vollflächig im Bereich der Außenfläche bzw. einer äußeren Oberfläche 56 des Grundkörpers 52 angeordnet oder bildet die Außenfläche aus.

Das Basiselement 53 ist im vorliegenden Ausführungsbeispiel durch sogenannte Kufen gebildet. Bevorzugt wird dabei für das Basiselement 53 ein elektrisch leitender Werkstoff gewählt, wobei dieser die zumindest eine Kontaktierungsfläche 14 bildet. Sind die das Basiselement 53 bildenden Kufen aus keinem elektrisch leitenden Werkstoff gebildet, sind die Kontaktierungsflächen 14 beispielsweise durch elektrisch leitende Einsatzelemente oder dergleichen auszubilden.

Zur Bildung des elektrischen Ableitungspfades ist die zumindest eine elektrisch leitende Schicht 55, welche am Grundkörper 52 angeordnet oder ausgebildet ist, elektrisch leitend mit der Kontaktierungsfläche 14 des Basiselements 53 zu verbinden bzw. verbunden. Diese Leitungsverbindung ist vereinfacht durch Striche angedeutet.

Zur Verbindung bzw. Halterung zwischen dem Grundkörper 52 und dem Basiselement 53 kann noch ein Tragrahmen 57 angeordnet sein, welche ebenfalls Bestandteil des Sportgeräts 3 ist. Der Tragrahmen 57 kann auch als sogenanntes Chassis bezeichnet werden.

Zusätzlich kann der Grundkörper 52 auch noch zumindest ein Abstützelement 58 für den oder die Benutzer umfassen. Das Abstützelement 58 weist eine dem Benutzer zugewendete bzw. zuwendbare Stützfläche 59 auf. Die Stützfläche 59 weist eine elektrisch leitende Schicht 60 auf oder das Abstützelement 58 ist zumindest abschnittsweise durch die elektrisch leitende Schicht 60 gebildet.

Bei der Verwendung des zuvor beschriebenen antistatischen Sportbekleidungssystems 26, insbesondere dann, wenn das Obermaterial durch die elektrisch leitende Schicht 34 gebildet ist oder diese aufweist, kann so eine Kontaktierung des Benutzers während seiner Abstützung auf der Stützfläche 59 mit der elektrisch leitenden Schicht 60 erfolgen. In weiterer Folge ist die elektrisch leitende Schicht 60 des Abstützelements 58 ebenfalls mit der Kontaktierungsfläche 14 des Basiselements 53 elektrisch leitend verbunden. Damit kann sowohl eine elektrostatische Aufladung des Grundkörpers 52 als auch die des Benutzers über das Abstützelement 58 hin zur Kontaktierungsfläche 14 und damit zur Erde abgeleitet werden.

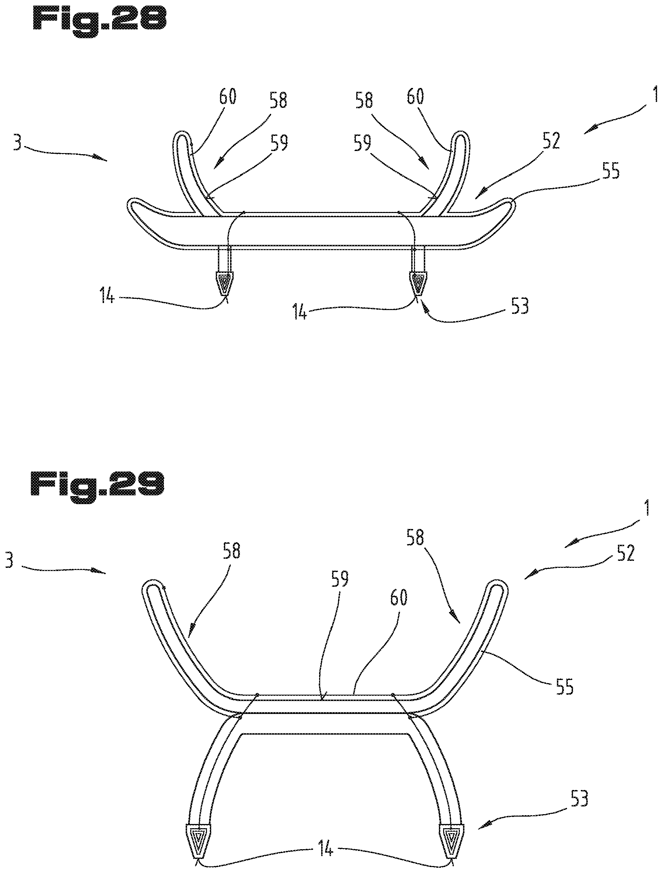

In den Fig. 28 und 29 ist gezeigt, dass das Sportgerät 3 beispielsweise durch einen Skeletonschlitten - Fig. 28 - oder eine Rodel, insbesondere Rennrodel - Fig. 29 - gebildet sein kann. Auch diese beiden Sportgeräte 3 können wiederum Bestandteil des antistatisch ausgebildeten Sportsystems 1 sein.

Das als Skeletonschlitten ausgebildete Sportgerät 3 weist ebenfalls den Grundkörper 52 auf, welcher zumindest abschnittsweise an seiner Außenseite bzw. seiner äußeren Oberfläche 56 mit der elektrisch leitenden Schicht 55 versehen ist oder zumindest abschnittsweise durch die elektrisch leitende Schicht 55 an seiner Außenseite gebildet ist. Am Grundkörper 52 ist auf der dem Gelände zugewendeten bzw. zuwendbaren Seite das Basiselement 53 in Form von Kufen, insbesondere aus einem elektrisch leitenden Werkstoff, angeordnet insbesondere daran befestigt. Auf der dem Benutzer zugewendeten Seite kann der Skeletonschlitten auch wiederum zumindest ein Abstützelement 58 aufweisen, wobei auch dieses wiederum zumindest abschnittsweise an seiner dem Benutzer zugewendeten Stützfläche 59 mit der elektrisch leitenden Schicht 60 versehen ist oder abschnittsweise durch diese gebildet ist.

Im vorliegenden Ausführungsbeispiel stehen die elektrisch leitende Schicht 55 des Grundkörpers 52 und die elektrisch leitende Schicht 60 des Abstützelements 58 miteinander in elektrisch leitender Verbindung. Die elektrisch leitenden Schichten 55, 60 sind ihrerseits wiederum mit der am Basiselement 53 angeordneten und ausgebildeten Kontaktierungsfläche 14 elektrisch leitend verbunden.

Da die Ausführung des Sportgeräts gemäß der Fig. 29 sehr ähnlich jener ist, wie diese bereits zuvor in der Fig. 28 beschrieben worden ist, wird hier nicht mehr näher darauf eingegangen.

Die zuvor in den Fig. 27 bis 29 beschriebenen Ausführungsformen des Sportgeräts 3 stehen direkt über deren Kufen mit dem Gelände in Kontakt, wobei die Kufen aus einem elektrisch leitenden Werkstoff, insbesondere einem metallischen Werkstoff, gebildet sind. Damit reicht zumeist eine einmalige Kontaktierung je Kufe aus.

In der Fig. 30 ist das als brettartig ausgebildete Sportgerät 3 vereinfacht im Querschnitt dargestellt, wobei auch dieses aus dem Grundkörper 52 sowie dem Basiselement 53 mit der oder den daran angeordneten und ausgebildeten Kontaktierungsflächen 14 ausgebildet ist. Der Einfachheit halber wurde auf eine detaillierte Darstellung des inneren Schichtaufbaus verzichtet. Die Kontaktierungsfläche 14 kann hier durch zumindest eine der Seitenkanten 15 und/oder den Laufflächenbelag 17 gebildet sein, welche gemeinsam das Basiselement 53 ausbilden.

An der äußeren Oberfläche 56 des Grundkörpers 52 kann wiederum die elektrisch leitende Schicht 55 angeordnet oder ausgebildet sein, welche beispielsweise über das im Inneren angeordnete Applikationselement 13 elektrisch leitend mit zumindest einer der Kontaktierungsflächen 14 verbunden ist.

Die zuvor beschriebene elektrisch leitende Schicht 55 kann je nach Bedarf aus den unterschiedlichsten Werkstoffen gebildet sein. So wäre es auch möglich, die Schicht 55 aus einem elektrisch leitfähig ausgebildeten Lack, einer Kunststoffschicht, einem im Bereich der äußeren Oberfläche 56 angeordneten Geflecht, Gewirke, Gestrick und/oder Gewebe aus elektrisch leitend ausgebildeten Fäden oder Fasern gebildet sein. Da der Grundkörper 52, insbesondere dessen Verkleidungselement 54, zumeist aus einem Kunststoffmaterial gebildet ist, welches auch noch mit zumindest einer Einlageschicht verstärkt sein kann, kann die aus einem flächigen Material gebildete elektrisch leitende Schicht 55 mit in das Kunststoffmaterial eingebettet oder daran durch dieses gehalten sein.

In den Fig. 3 1 und 32 ist das Sportgerät 3 des Sportsystems 1 als Stock, insbesondere Schistock, ausgebildet.

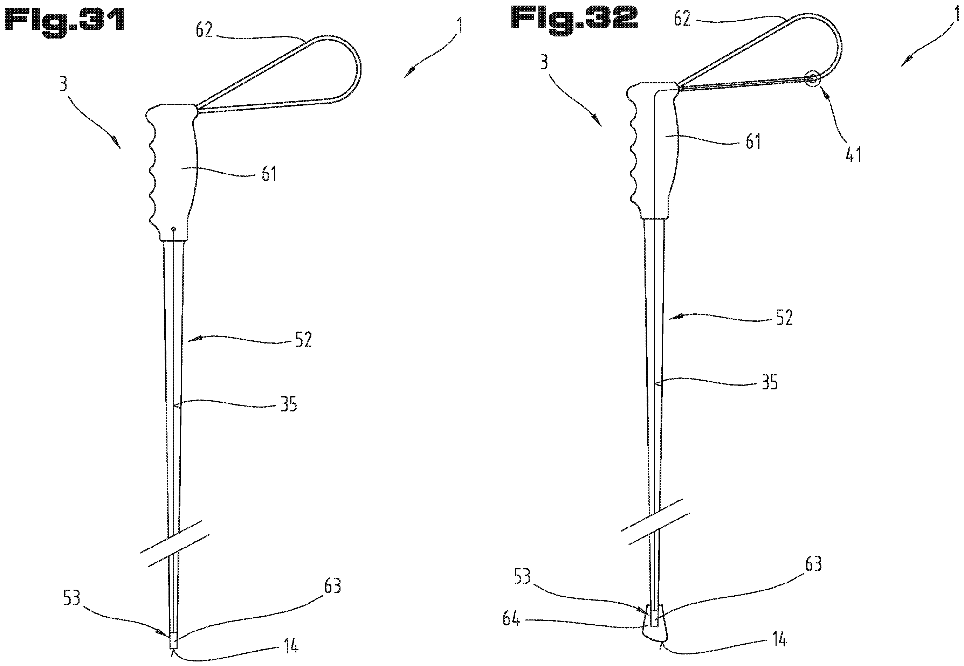

Gemäß der Darstellung der Fig. 31 ist der Grundkörper 52 stockförmig ausgebildet und umfasst zusätzlich noch ein daran angeordnetes oder ausgebildetes Griffelement 61 sowie eine Schlaufe 62. Im vorliegenden Ausführungsbeispiel ist sowohl das Griffelement 61 als auch die Schlaufe 62 elektrisch leitend ausgebildet oder mit einer elektrisch leitenden, nicht näher bezeichneten, Schicht versehen.

Der stockförmig ausgebildete Grundkörper 52 weist an seinem vom Griffelement 61 abgewendeten Ende bevorzugt eine Spitze 63 auf, welche bevorzugt aus einem elektrisch leitenden Werkstoff gebildet ist. So bildet die Spitze 63 im vorliegenden Ausführungsbeispiel das Basiselement 53 aus, welches seinerseits die Kontaktierungsfläche 14 ausbildet. Wie mit einem Strich schematisch angedeutet, steht das Griffelement 61 über den Grundkörper 52 elektrisch leitend mit dem durch die Spitze 63 gebildeten Basiselement 53 in elektrisch leitender Verbindung.

So wäre es möglich, beispielsweise den Grundkörper 52 selbst aus einem elektrisch leitenden Werkstoff auszubilden oder eine gesonderte elektrisch leitende Verbindung zu schaffen, wie diese durch die durch den Strich angedeutete Verbindungsleitung 35 dargestellt ist.

Bei der in der Fig. 32 dargestellten Ausführungsform des Sportgeräts 3 mit dem stockförmig ausgebildeten Grundkörper 52 ist lediglich im Bereich der Schlaufe 62 die bereits zuvor beschriebene, elektrisch leitende Verbindungsvorrichtung 41 angeordnet. Damit wird es möglich, über die gegebenenfalls im Grundkörper 52 angeordnete und/oder ausgebildete elektrische Verbindungsleitung 35 eine elektrisch leitende Verbindung aus dem Bereich der Schlaufe 62 hin zur Kontaktierungsfläche 14 zu schaffen.

Die Kontaktierung der elektrisch leitenden Verbindungsvorrichtung 41 im Bereich der Schlaufe 62 kann beispielsweise mit dem Finger-Bekleidungsstück 30 oder einer weiteren eigenen elektrischen Verbindungsleitung 35 mit einem der Bekleidungsstücke der Oberbekleidung 27, insbesondere dem Oberkörper-Bekleidungsstück 32, erfolgen.

Im Bereich des vom Griffelement 61 abgewendeten Endes des stockförmigen Grundkörper 52 ist noch angedeutet, dass die Kontaktierungsfläche 14 durch ein auf die Spitze 63 aufgesetztes Kontaktelement 64 gebildet sein kann. Dieses Kontaktelement 64 kann beispielsweise aus einem elektrisch leitenden Kunststoff gebildet sein, um so einen direkten harten Kontakt der zumeist aus einem metallischen Werkstoff gebildeten Spitze 63 mit dem Gelände zu vermeiden. Das Kontaktelement 64 kann beispielsweise bei sogenannten Walkingstöcken Anwendung finden.

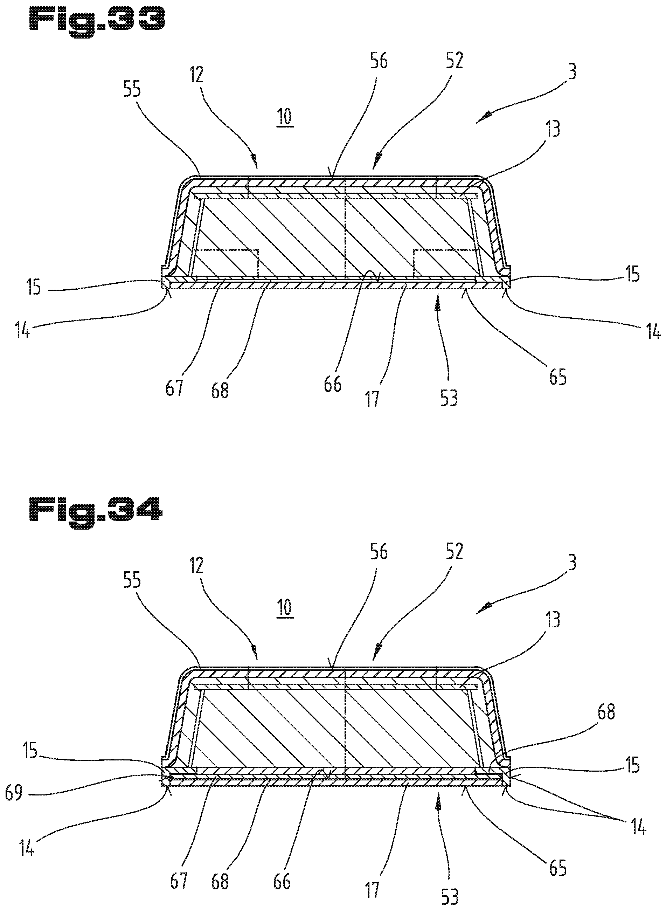

In der Fig. 33 ist ein weiteres Sportgerät 3 in Form eines brettartigen Gleitgeräts vereinfacht im Querschnitt dargestellt, wobei auch dieses aus dem Grundkörper 52 sowie dem Basiselement 53 mit der oder den daran angeordneten und ausgebildeten Kontaktierungsflächen 14 gebildet ist. Der Einfachheit halber wurde auf eine detaillierte Darstellung des möglichen inneren Schichtaufbaus verzichtet. Die zumindest eine Kontaktierungsfläche 14 wird bei diesem Ausführungsbeispiel zu einem überwiegenden Anteil durch zumindest eine der Seitenkanten 15 gebildet. Der Laufflächenbelag 17, welcher zumeist aus einem Kunststoffmaterial gebildet ist, kann durch Additive oder darin eingelagerte und/oder eingebettete Zusatzstoffe, wie z.B. Graphit oder andere elektrisch leitende Stoffe, nur zu einem geringen Anteil elektrisch leitend ausgebildet werden. Je höher z.B. der Anteil an Graphit wird, desto besser bzw. höher werden nicht nur die Gleiteigenschaften sowie die elektrische Leitfähigkeit, sondern es nehmen damit aber auch die Festigkeitseigenschaften und die Widerstandsfähigkeit im Fahrbetrieb, insbesondere bei Schlägen oder Kontakt mit harten Gegenständen (Steinen usw.) ab.

So bilden bei dem hier als brettartig ausgebildeten Sportgerät 3 die beiden Seitenkanten 15 sowie der Laufflächenbelag 17 das Basiselement 53 aus. Ein Schenkelteil der Seitenkante 15 überragt einen Teilabschnitt des Laufflächenbelags 17 in Richtung auf die jeweilige andere Seitenkante 15. Das brettartige Sportgerät 3 kann z.B. durch einen Alpinschi, Langlaufschi, Back-Country Schi, Sprungschi, Tourenschi oder ein Snowboard - auch in geteilter Ausführung - gebildet sein. Der Laufflächenbelag 17 weist eine einem Gelände zuwendbare Gleitfläche 65 sowie eine dem Grundkörper 52 zugewendete Rückfläche 66 auf. Zumindest eine der beiden Seitenkanten 15 als auch der Laufflächenbelag 17 sind je nach relativer Lage des Sportgeräts 3 zum Gelände zumindest zeitweise während des Gebrauchs durch einen Benutzer auf dem Gelände abgestützt bzw. abstützbar.

Zumindest eine der Seitenkanten 15 - bevorzugt jedoch beide Seitenkanten 17 - bilden hier jeweils eine dem Gelände zuwendbare Kontaktierungsfläche 14 aus. Weiters kann zwischen der Rückfläche 66 des Laufflächenbelags 17 und dem Grundkörper 52 zumindest abschnittsweise zumindest ein aus einem elektrisch leitenden Werkstoff gebildetes Kontaktierungselement 67 angeordnet sein. Das oder die Kontaktierungselemente 67 sind bevorzugt flächenhaft ausgebildet. Als Werkstoffe können nicht nur metallische Werkstoffe, wie z.B. Kupfer, Aluminium, Titan oder dergleichen, sondern auch elektrisch leitfähige Kunststoffe Anwendung finden. Der Laufflächenbelag 17 ist seinerseits über einen oder mehrere Ableitungspfade mit dem oder den Kontaktierungselementen 67 und weiters das oder die Kontaktierungselemente 67 mit der durch die zumindest eine Seitenkante 15 gebildete Kontaktierungsfläche 14 elektrisch leitend verbunden.

Der elektrisch leitende Ableitungspfad zwischen dem Laufflächenbelag 17 und dem zumindest einen Kontaktierungselement 67 kann z.B. durch eine elektrisch leitend ausgebildete Kleberschicht 68 gebildet sein. Die Kleberschicht 68 kann partiell und/oder vollflächig ausgebildet sein.

Der Grundkörper 52 kann bevorzugt an seiner Außenseite bzw. seiner äußeren Oberfläche 56 zumindest abschnittsweise zumindest eine elektrisch leitende Schicht 55 aufweisen oder zumindest abschnittsweise an seiner Außenseite durch zumindest die elektrisch leitende Schicht 55 gebildet sein. Die zumindest eine elektrisch leitende Schicht 55 ist über einen Ableitungspfad mit der mindestens einen Kontaktierungsfläche 14 und/oder dem zumindest einen Kontaktierungselement 67 elektrisch leitend verbunden.

Weiters kann im Inneren des Grundkörpers 52 wiederum zumindest ein aus einem elektrisch leitenden Werkstoff gebildetes Applikationselement 13 angeordnet sein, wie dies bereits zuvor näher beschrieben worden ist. Das zumindest eine Applikationselement 13 kann bevorzugt in zumindest einem für die Befestigung der Kupplungsvorrichtung 10 vorgesehenen Befestigungsbereich 12 angeordnet sein. Das oder die Applikationselemente 13 können mit Seitenkante 15 bzw. deren Kontaktierungsfläche 14 und/oder dem zumindest einen Kontaktierungselement 67 elektrisch leitend verbunden sein. Weiters kann aber auch noch das oder die Applikationselemente 13 mit der zumindest einen elektrisch leitend ausgebildeten Schicht 55 an der Außenseite des Grundkörpers 52 elektrisch leitend verbunden sein. All diese zuvor beschriebenen elektrisch leitend ausgebildeten Verbindungen können Teilabschnitte des oder der elektrischen Ableitungspfade ausbilden. Die einzelnen elektrisch leitenden Verbindungen sind nur vereinfacht durch unterschiedliche Striche angedeutet.

In der Fig. 34 ist ein weiteres Sportgerät 3 in Form eines brettartigen Gleitgeräts vereinfacht im Querschnitt dargestellt, wobei auch dieses aus dem Grundkörper 52 sowie dem Basiselement 53 mit der oder den daran angeordneten und ausgebildeten Kontaktierungsflächen 14 gebildet ist. Der Einfachheit halber wurde auf eine detaillierte Darstellung des möglichen inneren Schichtaufbaus verzichtet. Die zumindest eine Kontaktierungsfläche 14 wird auch bei diesem Ausführungsbeispiel zu einem überwiegenden Anteil durch zumindest eine der Seitenkanten 15 gebildet.

So bilden bei auch dem hier als brettartig ausgebildeten Sportgerät 3 die beiden Seitenkanten 15 sowie der Laufflächenbelag 17 das Basiselement 53 aus. Die zumindest eine dem Gelände zuwendbare Kontaktierungsfläche 14 wird auch hier durch einen äußeren bzw. randseitigen Teilabschnitt der Seitenkanten 15 gebildet.

Im Gegensatz zur zuvor in der Fig. 33 beschriebenen Ausführungsform erstreckt sich das zumindest eine Kontaktierungselement 67 nahezu über die gleiche Breite des Laufflächenbelags 17 des Sportgeräts 3 und ist somit beidseits im Bereich der Seitenkanten 15 jeweils von einem Schenkelteil derselben hintergriffen bzw. übergriffen. Zwischen der dem Grundkörper 52 zugewendeten Rückfläche 66 des Laufflächenbelags 17 und dem zumindest einen Kontaktierungselement 67 kann wiederum die elektrisch leitend ausgebildete Kleberschicht 68 angeordnet sein. Weiters kann die Kleberschicht 68 auch noch im Bereich von Seitenstirnflächen 69 des Kontaktierungselements 67 und zusätzlich auch noch zwischen dem oder den Schenkelteilen der Seitenkanten 15 und dem Kontaktierungselement 67 angeordnet sein. Damit kann eine direkte elektrische Kontaktierung des Laufflächenbelags 17 mit dem zumindest einen Kontaktierungselement 67 über die Kleberschicht 68 zur zumindest einen Seitenkante 15 und deren Kontaktierungsfläche 14 bzw. Kontaktierungsflächen 14 ausgebildet werden, ohne dass zusätzliche Leitungsverbindungen vorgesehen werden müssen. Die Kleberschicht 68 wurde der besseren Übersichtlichkeit halber nur durch einen dickeren Strich eingetragen und umschließt im Querschnitt gesehen das Kontaktierungselement 67 an seiner dem Laufflächenbelag 17 zugewendeten Seite und weiters über die Seitenstirnflächen 69 bis hin zu den das Kontaktierungselement 67 übergreifenden Schenkelteilen der Seitenkanten 15.

Um einen Höhenausgleich mit den Schenkelteilen der Seitenkanten 1 5 zu erzielen, kann das Basiselement 53 und/oder der Grundkörper 52 noch eine nicht näher bezeichnete Zwischenschicht umfassen.

Die zuvor beschriebenen Ausbildungen, nämlich der bevorzugt an der Außenseite bzw. der äußeren Oberfläche 56 zumindest abschnittsweise angeordneten zumindest einen elektrisch leitend ausgebildeten Schicht 55 und/oder dem zumindest einen Applikationselement 13, welches bevorzugt im Befestigungsbereich 12 der nicht näher dargestellten Kupplungsvorrichtung 10 angeordnet ist, mit deren unterschiedlichen gegenseitigen Kontaktierungsmöglichkeiten kann analog erfolgen, wie dies zuvor in den Fig. 30 und 33 beschrieben worden ist.

Unabhängig davon wäre es aber auch noch möglich, das oder die Kontaktierungselemente 67 direkt durch die elektrisch leitend ausgebildete Kleberschicht 68 zu bilden. So könnten in die Kleberschicht 68 zusätzlich zum Haftmaterial elektrisch leitende Partikel mit eingebettet sein. Damit kann so die elektrostatische Aufladung des Laufflächenbelags 17 direkt über die das zumindest eine Kontaktierungselement 67 bildende Kleberschicht 68 an die Seitenkanten 15 und deren Kontaktierungsflächen 14 abgeleitet werden. Einen großen Vorteil hätte diese Ausführungsform, da so der gesamte Laufflächenbelag 17, insbesondere dessen Rückfläche 66, über dessen Fläche nahezu bis vollständig einerseits mit dem Grundkörper 52 verbunden und andererseits eine großflächig elektrisch leitender Ableitungspfad geschaffen werden kann.

Die Ausführungsbeispiele zeigen mögliche Ausführungsvarianten des Sportsystems 1, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt.

Weiters können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

Die den eigenständigen erfinderischen Lösungen zugrundeliegende Aufgabe kann der Beschreibung entnommen werden.

Vor allem können die einzelnen in den Fig. 1, 2; 3, 4; 5; 6, 7; 8; 9; 10; 11; 12; 13; 14; 15; 16; 17; 18; 19; 20; 21; 22; 23; 24; 25; 26; 27; 28; 29; 30; 31; 32; 33; 34 gezeigten Ausführungen den Gegenstand von eigenständigen, erfindungsgemäßen Lösungen bilden. Die diesbezüglichen, erfindungsgemäßen Aufgaben und Lösungen sind den Detailbeschreibungen dieser Figuren zu entnehmen.

Der Ordnung halber sei abschließend darauf hingewiesen, dass zum besseren Verständnis des Aufbaus des Sportsystems 1 dieses bzw. dessen Bestandteile teilweise unmaßstäblich und/oder vergrößert und/oder verkleinert dargestellt wurden.

**Bezugszeichenaufstellung**

| | | | |
|---|---|---|---|
| 1 | Sportsystem | 31 | Fuß-Bekleidungsstück |
| 2 | Schuh | 32 | Oberkörper-Bekleidungsstück |
| 3 | Sportgerät | 33 | Bein-Bekleidungsstück |
| 4 | Schuhinnenraum | 34 | Schicht |
| 5 | Ableitungselement | 35 | Verbindungsleitung |
| 6 | Außenseite | 36 | Schicht |
| 7 | erstes Kontaktelement | 37 | Ärmelabschluss |
| 8 | Schale | 38 | Oberfläche |
| 9 | Innenschuh | 39 | Schicht |
| 10 | Kupplungsvorrichtung | 40 | Brillenband |
| 11 | Verbindungselement | 41 | Verbindungsvorrichtung |
| 12 | Befestigungsbereich | 42 | Schicht |
| 13 | Applikationselement | 43 | Helmschale |
| 14 | Kontaktierungsfläche | 44 | Dämpfungsmaterial |
| 15 | Seitenkante | 45 | Kopfaufnahmeraum |
| 16 | zweites Kontaktelement | 46 | Schicht |
| 17 | Laufflächenbelag | 47 | Kontaktierungsleitung |
| 18 | Kupplungselement | 48 | Innenmaterial |
| 19 | Kupplungszapfen | 49 | Außenschicht |
| 20 | Schifell | 50 | Zwischenschicht |
| 21 | Aufnahmeöffnung | 51 | Isolierschicht |
| 22 | Einsatzteil | 5 2 | Grundkörper |
| 23 | Befestigungselement | 53 | Basiselement |
| 24 | äußerer Rahmenteil | 54 | Verkleidungselement |
| 25 | Schuhabstützung | 55 | Schicht |
| 26 | Sportbekleidungssystem | 56 | äußere Oberfläche |
| 27 | Oberbekleidung | 57 | Tragrahmen |
| 28 | Schutzhelm | 58 | Abstützelement |
| 29 | Schutzbrille | 59 | Stützfläche |
| 30 | Finger-Bekleidungsstück | 60 | Schicht |
| 61 | Griffelement | | |
| 62 | Schlaufe | | |
| 63 | Spitze | | |
| 64 | Kontaktelement | | |
| 65 | Gleitfläche | | |
| 66 | Rückfläche | | |
| 67 | Kontaktierungselement | | |
| 68 | Kleberschicht | | |
| 69 | Seitenstimfläche | | |

## Patentansprüche

1. Sportsystem (1), insbesondere für Wintersport, Bergsport, umfassend einen Schuh (2) mit mindestens einem an seiner Außenseite (6) angeordneten oder ausgebildeten ersten Kontaktelement (7), welches erste Kontaktelement (7) mit einem im Schuh (2) aufzunehmenden Fuß eines Benutzers elektrisch leitend verbindbar ist, sowie ein Sportgerät (3), **dadurch gekennzeichnet, dass** das erste Kontaktelement (7) des Schuhs (2) über einen Ableitungspfad mit mindestens einer einem Gelände zuwendbaren Kontaktierungsfläche (14) des Sportgeräts (3) elektrisch leitend verbunden ist und damit Ableitung von elektrostatischen Aufladungen ermöglicht.

2. Sportsystem (1) nach Anspruch 1, **dadurch gekennzeichnet, dass** das mit der Kontaktierungsfläche (14) versehene Sportgerät (3) brettartig ausgebildet ist und aus der Gruppe von Alpinschi, Langlaufschi, Back-Country Schi, Sprungschi, Tourenschi, Snowboard ausgewählt ist.

3. Sportsystem (1) nach Anspruch 2, **dadurch gekennzeichnet, dass** die Kontaktierungsfläche (14) beim brettartig ausgebildeten Sportgerät (3) durch zumindest eine aus einem elektrisch leitenden Werkstoff gebildete Seitenkante (15) gebildet ist.

4. Sportsystem (1) nach einem der Ansprüche 2 oder 3, **dadurch gekennzeichnet, dass** die Kontaktierungsfläche (14) beim brettartig ausgebildeten Sportgerät (3) durch zumindest einen aus einem elektrisch leitenden Werkstoff gebildeten Teilabschnitt eines Laufflächenbelags (17) gebildet ist.

5. Sportsystem (1) nach einem der Ansprüche 2 bis 4, **dadurch gekennzeichnet, dass** das brettartige ausgebildete Sportgerät (3) einen Grundkörper (52) und zumindest ein am Grundkörper (52) angeordnetes oder ausgebildetes Basiselement (53) umfasst, welches Basiselement (53) den Laufflächenbelag (17) und zumindest die aus dem elektrisch leitenden Werkstoff gebildete Seitenkante (15) umfasst, wobei der Laufflächenbelag (17) eine Gleitfläche (65) sowie eine dem Grundkörper (52) zugewendete Rückfläche (66) aufweist und dass zwischen der Rückfläche (66) des Laufflächenbelags (17) und dem Grundkörper (52) zumindest abschnittsweise zumindest ein aus einem elektrisch leitenden Werkstoff gebildetes Kontaktierungselement (67) angeordnet ist, und dass der Laufflächenbelag (17) über den Ableitungspfad mit dem Kontaktierungselement (67) und weiters das Kontaktierungselement (67) mit der durch die zumindest eine Seitenkante (15) gebildeten Kontaktierungsfläche (14) elektrisch leitend verbunden ist.

6. Sportsystem (1) nach Anspruch 5, **dadurch gekennzeichnet, dass** das zumindest eine Kontaktierungselement (67) durch eine elektrisch leitend ausgebildete Kleberschicht (68) gebildet ist.

7. Sportsystem (1) nach einem der Ansprüche 2 bis 6, **dadurch gekennzeichnet, dass** am brettartig ausgebildeten Sportgerät (3) zumindest ein Befestigungsbereich (12) vorgesehen ist, in welchem Befestigungsbereich (12) zumindest eine Kupplungsvorrichtung (10) zur Halterung des Schuhs (2) in einer gekuppelten Stellung am brettartigen Sportgerät (3) angeordnet ist, wobei mittels zumindest eines Verbindungselements (11) die Kupplungsvorrichtung (10) mit dem Sportgerät (3) verbunden ist und dass das Verbindungselement (11) aus einem elektrisch leitenden Werkstoff gebildet ist.

8. Sportsystem (1) nach Anspruch 7, **dadurch gekennzeichnet, dass** im brettartig ausgebildeten Sportgerät (3) im Befestigungsbereich (12) zumindest ein Befestigungselement (23) angeordnet ist, welches mit der Kontaktierungsfläche (14) elektrisch leitend verbunden ist.

9. Sportsystem (1) nach einem der Ansprüche 7 oder 8, **dadurch gekennzeichnet, dass** das Verbindungselement (11) der Kupplungsvorrichtung (10) mit dem Befestigungselement (23) verbunden ist und das Verbindungselement (11) in einer mit dem Schuh (2) gekuppelten Stellung mit dem ersten Kontaktelement (7) des Schuhs (2) kontaktiert ist.

10. Sportsystem (1) nach einem der Ansprüche 2 bis 7, **dadurch gekennzeichnet, dass** am und/oder innerhalb des brettartigen Sportgeräts (3) zumindest im Befestigungsbereich (12) der Kupplungsvorrichtung (10) am brettartig ausgebildeten Sportgerät (3), ein aus einem elektrisch leitenden Werkstoff gebildetes Applikationselement (13) vorgesehen ist, welches Applikationselement (13) mit der Kontaktierungsfläche (14) elektrisch leitend verbunden ist.

11. Sportsystem (1) nach Anspruch 7 oder 10, **dadurch gekennzeichnet, dass** an der Kupplungsvorrichtung (10) zumindest ein zweites Kontaktelement (16) angeordnet oder ausgebildet ist, welches in der mit dem Schuh (2) gekuppelten Stellung mit dem ersten Kontaktelement (7) des Schuhs (2) kontaktiert ist.

12. Sportsystem (1) nach Anspruch 10 oder 11, **dadurch gekennzeichnet, dass** das zweite Kontaktelement (16) der Kupplungsvorrichtung (10) elektrisch leitend mit dem Applikationselement (13) verbunden ist.

13. Sportsystem (1) nach einem der Ansprüche 7 oder 10 bis 12, **dadurch gekennzeichnet, dass** das zweite Kontaktelement (16) der Kupplungsvorrichtung (10) über elektrisch leitend ausgebildete Bauteile der Kupplungsvorrichtung (10) sowie über das zumindest eine Verbindungselement (11) elektrisch leitend mit dem Applikationselement (13) verbunden ist.

14. Sportsystem (1) nach einem der Ansprüche 2 bis 10, **dadurch gekennzeichnet, dass** die Kontaktierungsfläche (14) des brettartig ausgebildeten Sportgeräts (3) mittels eines Kabels direkt mit dem zweiten Kontaktelement (16) der Kupplungsvorrichtung (10) elektrisch leitend verbunden ist.

15. Sportsystem (1) nach einem der Ansprüche 1 bis 14, **dadurch gekennzeichnet, dass** das erste Kontaktelement (7) am Schuh (2) in dessen Sohlenbereich, insbesondere in dessen vorderen Sohlenabschnitt, angeordnet oder ausgebildet ist.

16. Sportsystem (1) nach einem der Ansprüche 1 bis 14, **dadurch gekennzeichnet, dass** das erste Kontaktelement (7) durch zumindest ein am Schuh (2) angeordnetes oder ausgebildetes Kupplungselement (18) gebildet ist, mit welchem Kupplungselement (18) der Schuh (2) an der am brettartig ausgebildeten Sportgerät (3) angeordneten Kupplungsvorrichtung (10) in der gekuppelten Stellung gehalten ist.

17. Sportsystem (1) nach einem der Ansprüche 2 bis 4, **dadurch gekennzeichnet, dass** am brettartig ausgebildeten Sportgerät (3) im Bereich seines dem Gelände zuwendbaren Laufflächebelages (17) zumindest bereichsweise ein Schifell (20) angeordnet ist, welches Schifell (20) zumindest in Teilabschnitten elektrisch leitend ausgebildet und/oder mit einem elektrisch leitenden Fellfloor versehen ist und dieses die Kontaktierungsfläche (14) bildet.

18. Sportsystem (1) nach Anspruch 17, **dadurch gekennzeichnet, dass** der elektrisch leitende Teilabschnitt des Schifells (20) und/oder der elektrisch leitende Fellfloor mit zumindest einer der Kontaktierungsflächen (14) des Sportgeräts (3) elektrisch leitend verbunden ist bzw. sind oder dass der elektrisch leitende Teilabschnitt des Schifells (20) und/oder der elektrisch leitende Fellfloor direkt mit dem Applikationselement (13) elektrisch leitend verbunden ist.

## Claims

1. A sports system (1), in particular for winter sports, mountaineering, comprising a shoe (2) with at least one first contact element (7) arranged or formed on the outer side (6), said first contact element (7) being electrically connectable to a foot of a user to be held in the shoe (2), as well as a piece of sports equipment (3), **characterized in that** the first contact element (7) of the shoe (2) electroconductively connected via a discharge path to at least one contacting surface (14) of the piece of sports equipment (3) that can be turned towards a ground and hence allows for discharge of electrostatic charges.

2. The sports system (1) according to claim 1, **characterized in that** the piece of sports equipment (3) provided with the contacting surface (14) is designed to be board-like and is selected from the group of alpine skis, cross-country skis, back-country skis, jumping skis, touring skis, snowboards.

3. The sports system (1) according to claim 2, **characterized in that** the contacting surface (14) of the board-like piece of sports equipment (3) is formed by at least one lateral edge (15) formed of an electroconductive material.

4. The sports system (1) according to one of claims 2 or 3, **characterized in that** the contacting surface (14) of the board-like piece of sports equipment (3) is formed by at least one section of a running surface layer (17) formed of an electroconductive material.

5. The sports system (1) according to one of claims 2 to 4, **characterized in that** the board-like piece of sports equipment (3) comprises a base body (52) and at least one base element (53) arranged or formed on the base body (52), said base element (53) comprising the running surface layer (17) and at least the lateral edge (15) formed of the electroconductive material, wherein the running surface layer (17) comprises a sliding surface (65) as well as a back surface (66) facing the base body (52) and **in that** at least one contacting element (67) formed of an electroconductive material is at least sectionally arranged between the back surface (66) of the running surface layer (17) and the base body (52), and **in that** the running surface layer (17) is electroconductively connected via the discharge path to the contacting element (67) and further the contacting element (67) is electroconductively connected to the contacting surface (14) formed by the at least one lateral edge (15).

6. The sports system (1) according to claim 5, **characterized in that** the at least one contacting element (67) is formed by an electroconductively designed adhesive layer (68).

7. The sports system (1) according to one of claims 2 to 6, **characterized in that** at least one fastening region (12) is provided on the board-like piece of sports equipment (3), with at least one coupling device (10) for mounting the shoe (2) on the board-like piece of sports equipment (3) in a coupled position being arranged in said fastening region (12), wherein by means of at least one connection element (11), the coupling device (10) is connected to the piece of sports equipment (3) and **in that** the connection element (11) is formed of an electroconductive material.

8. The sports system (1) according to claim 7, **characterized in that** at least one fastening element (23), which is electroconductively connected to the contacting surface (14), is arranged in the fastening region (12) in the board-like piece of sports equipment (3).

9. The sports system (1) according to one of claims 7 or 8, **characterized in that** the connection element (11) of the coupling device (10) is connected to the fastening element (23) and the connection element (11), in a position coupled to the shoe (2), is contacted to the first contact element (7) of the shoe (2).

10. The sports system (1) according to one of claims 2 to 7, **characterized in that** an application element (13) formed of an electroconductive material is provided on and/or within the board-like piece of sports equipment (3) at least in the fastening region (12) of the coupling device (10) on the board-like piece of sports equipment (3), said application element (13) being electroconductively connected to the contacting surface (14).

11. The sports system (1) according to claim 7 or 10, **characterized in that** at least one second contact element (16), which is contacted to the first contact element (7) of the shoe (2) in the position coupled to the shoe (2), is arranged or formed on the coupling device (10).

12. The sports system (1) according to claim 10 or 11, **characterized in that** the second contact element (16) of the coupling device (10) is electroconductively connected to the application element (13).

13. The sports system (1) according to one of claims 7 or 10 to 12, **characterized in that** the second contact element (16) of the coupling device (10) is electroconductively connected to the application element (13) via electroconductively designed components of the coupling device (10) as well as via the at least one connection element (11).

14. The sports system (1) according to one of claims 2 to 10, **characterized in that** the contacting surface (14) of the board-like piece of sports equipment (3) is electroconductively connected to the second contact element (16) of the coupling device (10) directly by means of a cable.

15. The sports system (1) according to one of claims 1 to 14, **characterized in that** the first contact element (7) is arranged or formed on the shoe (2) in its sole region, in particular in its front sole section.

16. The sports system (1) according to one of claims 1 to 14, **characterized in that** the first contact element (7) is formed by at least one coupling element (18) arranged or formed on the shoe (2), the shoe (2) being held on the coupling device (10) arranged on the board-like piece of sports equipment (3) in the coupled position by means of said coupling element (18).

17. The sports system (1) according to one of claims 2 to 4, **characterized in that** a ski skin (20) is at least sectionally arranged on the board-like piece of sports equipment (3) in the region of its running surface layer (17) that can be turned towards the ground, said ski skin (20) being designed electroconductively at least in some sections and/or being provided with an electroconductive skin pile forming the contacting surface (14).

18. The sports system (1) according to claim 17, **characterized in that** the electroconductive section of the ski skin (20) and/or the electroconductive skin pile is or are electroconductively connected to at least one of the contacting surfaces (14) of the piece of sports equipment (3) or that the electroconductive section of the ski skin (20) and/or the electroconductive skin pile are electroconductively connected directly to the application element (13).

## Revendications

1. Système sportif (1), en particulier pour sports d'hiver, sports de montagne, comprenant une chaussure (2) avec au moins un premier élément de contact (7), disposé ou constitué sur son côté extérieur (6), lequel premier élément de contact (7) peut être raccordé de façon électriquement conductrice à un pied d'utilisateur devant être logé dans la chaussure (2), ainsi qu'un appareil sportif (3), **caractérisé en ce que** le premier élément de contact (7) de la chaussure (2) est, par le biais d'un trajet de déviation, raccordé de façon électriquement conductrice à au moins une surface de mise en contact (14) de l'appareil sportif (3) pouvant être tournée vers le sol et permet ainsi de dévier des charges électrostatiques.

2. Système sportif (1) selon la revendication 1, **caractérisé en ce que** l'appareil sportif (3) muni de la surface de mise en contact (14) est constitué en forme de planche et est sélectionné parmi le groupe ski alpin, ski de fond, ski backcountry, ski de saut, ski de randonnée, snowboard.

3. Système sportif (1) selon la revendication 2, **caractérisé en ce que**, dans le cas de l'appareil sportif (3) constitué en forme de planche, la surface de mise en contact (14) est formée par au moins une arête latérale (15) formée d'un matériau électriquement conducteur.

4. Système sportif (1) selon l'une des revendications 2 ou 3, **caractérisé en ce que**, dans le cas de l'appareil sportif (3) constitué en forme de planche, la surface de mise en contact (14) est formée par au moins un tronçon partiel d'un revêtement de surface de contact (17) formé d'un matériau électriquement conducteur.

5. Système sportif (1) selon l'une des revendications 2 à 4, **caractérisé en ce que** l'appareil sportif (3) constitué en forme de planche comprend un corps de base (52) et au moins un élément de base (53) disposé ou constitué sur le corps de base (52), lequel élément de base (53) comprend le revêtement de surface de contact (17) et au moins l'arête latérale (15) formée du matériau électriquement conducteur, dans lequel le revêtement de surface de contact (17) comporte une surface de glissement (65) ainsi qu'une surface arrière (66) tournée vers le corps de base (52), et **en ce que**, au moins par tronçons, au moins un élément de mise en contact (67) formé en matériau électriquement conducteur est disposé entre la surface arrière (66) du revêtement de surface de contact (17) et le corps de base (52), et **en ce que** le revêtement de surface de contact (17) est raccordé de façon électriquement conductrice à l'élément de mise en contact (67) par le biais du trajet de déviation, et en outre l'élément de mise en contact (67) est raccordé de façon électriquement conductrice à la surface de mise en contact (14) formée par l'au moins une arête latérale (15).

6. Système sportif (1) selon la revendication 5, **caractérisé en ce que** l'au moins un élément de mise en contact (67) est formé par une couche adhésive (68) constituée de façon électriquement conductrice.

7. Système sportif (1) selon l'une des revendications 2 à 6, **caractérisé en ce que**, sur l'appareil sportif (3) en forme de planche, il est prévu au moins une zone de fixation (12), dans laquelle zone de fixation (12) il est disposé au moins un dispositif d'accouplement (10) destiné à retenir la chaussure (2) sur l'appareil sportif (3) en forme de planche dans une position accouplée, dans lequel, au moyen d'au moins un élément de raccordement (11), le dispositif d'accouplement (10) est raccordé à l'appareil sportif (3), et **en ce que** l'élément de raccordement (11) est formé d'un matériau électriquement conducteur.

8. Système sportif (1) selon la revendication 7, **caractérisé en ce que**, dans l'appareil sportif (3) constitué en forme de planche, au moins un élément de fixation (23) est disposé dans la zone de fixation (12), lequel est raccordé de façon électriquement conductrice à la surface de mise en contact (14).

9. Système sportif (1) selon l'une des revendications 7 ou 8, **caractérisé en ce que** l'élément de raccordement (11) du dispositif d'accouplement (10) est raccordé à l'élément de fixation (23), et l'élément de raccordement (11) est mis en contact avec le premier élément de contact (7) de la chaussure (2) dans une position accouplée avec la chaussure (2).

10. Système sportif (1) selon l'une des revendications 2 à 7, **caractérisé en ce que**, sur et/ou à l'intérieur de l'appareil sportif (3) en forme de planche, au moins dans la zone de fixation (12) du dispositif d'accouplement (10) sur l'appareil sportif (3) constitué en forme de planche, il est prévu un élément d'application (13) formé d'un matériau électriquement conducteur, lequel élément d'application (13) est raccordé de façon électriquement conductrice à la surface de mise en contact (14).

11. Système sportif (1) selon la revendication 7 ou 10, **caractérisé en ce que**, sur le dispositif d'accouplement (10), il est disposé ou constitué au moins un deuxième élément de contact (16) qui est mis en contact avec le premier élément de contact (7) de la chaussure (2) dans la position accouplée avec la chaussure (2).

12. Système sportif (1) selon la revendication 10 ou 11, **caractérisé en ce que** le deuxième élément de contact (16) du dispositif d'accouplement (10) est raccordé de façon électriquement conductrice à l'élément d'application (13).

13. Système sportif (1) selon l'une des revendications 7 ou 10 à 12, **caractérisé en ce que** le deuxième élément de contact (16) du dispositif d'accouplement (10) est raccordé de façon électriquement conductrice à l'élément d'application (13) par le bais de composants du dispositif d'accouplement (10) constitués de façon électriquement conductrice ainsi que par le biais de l'au moins un élément de raccordement (11).

14. Système sportif (1) selon l'une des revendications 2 à 10, **caractérisé en ce que** la surface de mise en contact (14) de l'appareil sportif (3) constitué en forme de planche est raccordé de façon électriquement conductrice directement au deuxième élément de contact (16) du dispositif d'accouplement (10) au moyen d'un câble.

15. Système sportif (1) selon l'une des revendications 1 à 14, **caractérisé en ce que** le premier élément de contact (7) est disposé ou constitué sur la chaussure (2) dans sa zone de semelle, en particulier dans son tronçon de semelle avant.

16. Système sportif (1) selon l'une des revendications 1 à 14, **caractérisé en ce que** le premier élément de contact (7) est formé par au moins un élément d'accouplement (18) disposé ou constitué sur la chaussure (2), avec lequel élément d'accouplement (18) la chaussure (2) est retenue dans la position accouplée sur le dispositif d'accouplement (10) disposé sur l'appareil sportif (3) constitué en forme de planche.

17. Système sportif (1) selon l'une des revendications 2 à 4, **caractérisé en ce que**, sur l'appareil sportif (3) constitué en forme de planche, dans la zone de son revêtement de surface de contact (17) pouvant être tournée vers le sol, il est disposé au moins par zones une peau de phoque (20), laquelle peau de phoque (20) est constituée de façon électriquement conductrice au moins dans des tronçons partiels et/ou munie d'un fond de peau de phoque électriquement conducteur, et celui-ci forme la surface de mise en contact (14).

18. Système sportif (1) selon la revendication 17, **caractérisé en ce que** le tronçon partiel électriquement conducteur de la peau de phoque (20) et/ou le fond de peau de phoque électriquement conducteur est ou respectivement sont raccordés de façon électriquement conductrice à au moins une des surfaces de mise en contact (14) de l'appareil sportif (3), ou **en ce que** le tronçon partiel électriquement conducteur de la peau de phoque (20) et/ou le fond de peau de phoque électriquement conducteur est raccordé de façon électriquement conductrice directement à l'élément d'application (13).
